# EUROPEAN PATENT APPLICATION

(11) **EP 4 432 616 A1**
(43) Date of publication of application: **18.09.2024**
(21) Application number: 22892135.9
(22) Date of filing: 14.11.2022
(51) Int. Cl.: H04L 27/34

(54) **DATA PROCESSING METHOD AND MODULE, AND ELECTRONIC DEVICE AND STORAGE MEDIUM**

(30) Priority: 12.11.2021 CN 202111342602
(71) Applicant: ZTE Corporation, Shenzhen, Guangdong 518057 (CN)
(72) Inventor: YUAN, Zhifeng, Shenzhen, Guangdong 518057 (CN); XU, Jin, Shenzhen, Guangdong 518057 (CN)
(74) Representative: Iannone, Carlo Luigi
(86) International application number: PCT/CN2022/131611
(87) International publication number: WO 2023/083342

(57) **Abstract**

Provided are a data processing method and module, an electronic device, and a storage medium. In the data processing method, mapping bits of N symbols to bit positions of modulation symbols includes mapping all bits of at least one symbol among the N symbols to bit positions of a modulation symbol that have the same reliability level, where N is an integer, and N>1.

## Description

### FIELD

Embodiments of the present application relate to the technical field of data processing, for example, a data processing method and module, an electronic device, and a storage medium.

### BACKGROUND

In wireless communications in the related art, a sending end generally encodes to-be-transmitted data to obtain encoded codewords and modulates and sends the encoded codewords. With a continuous increase in the volume of communication data, the communication demand for high-rate transmission is becoming increasingly high. Currently, the high-rate transmission is usually achieved by a combination of a high-order modulation scheme and high-rate error correction coding.

In the high-order modulation scheme, bits of each symbol in the encoded codewords are mapped to bit positions of a higher-order modulation symbol. Since multiple bit positions of the higher-order modulation symbol are different in reliability, when a bit position with the lower reliability is in error, the symbol mapped to the higher-order modulation symbol has a bit error. If the bit position with the lower reliability is in error frequently, the bit error rate of the symbol is relatively high, causing a certain effect on the accuracy of data transmission.

### SUMMARY

Embodiments of the present application provide a data processing method and module, an electronic device, and a storage medium, so as to reduce an overall bit error rate of a symbol and improve data transmission performance.

An embodiment of the present application provides a data processing method. The data processing method includes mapping all bits of at least one symbol among N symbols to bit positions of a modulation symbol that have the same reliability level, where N is an integer, and N>1

An embodiment of the present application provides a data processing method. The data processing method includes: in response to determining that a modulation symbol has three or more reliability levels, and the number of bits of a single symbol is greater than or equal to the number of bit positions of a single modulation symbol, mapping all bits of at least one symbol among N symbols to bit positions of the modulation symbol that have different non-lowest reliability levels.

An embodiment of the present application provides a data processing method. The data processing method includes demodulating a modulated signal to obtain a bit sequence and reordering multiple bits in the bit sequence according to a preset rule; and obtaining N symbols according to the reordered multiple bits. The modulated signal is generated after a sending end of the modulated signal processes the N symbols according to the data processing method described above, and the preset rule corresponds to a rule used in a process in which the sending end of the modulated signal maps bits of the N symbols to bit positions of modulation symbols.

An embodiment of the present application provides a data processing module. The data processing module is configured to map all bits of at least one symbol among N symbols to bit positions of a modulation symbol that have the same reliability level, where N is an integer, and N>1; or in response to determining that a modulation symbol has three or more reliability levels, and the number of bits of a single symbol is greater than or equal to the number of bit positions of a single modulation symbol, map all bits of at least one symbol among N symbols to bit positions of the modulation symbol that have different non-lowest reliability levels.

An embodiment of the present application provides a data processing module. The data processing module is configured to demodulate a modulated signal to obtain a bit sequence reorder multiple bits in the bit sequence according to a preset rule, and obtain N symbols according to the reordered multiple bits. The modulated signal is generated after a sending end of the modulated signal processes the N symbols according to the data processing method described above, and the preset rule corresponds to a rule used in a process in which the sending end of the modulated signal maps bits of the N symbols to bit positions of modulation symbols.

An embodiment of the present application provides an electronic device. The electronic device includes at least one processor and a memory communicatively connected to the at least one processor. The memory stores an instruction executable by the at least one processor, and the instruction, when executed by the at least one processor, causes the at least one processor to perform the method described above.

An embodiment of the present application provides a computer-readable storage medium. The computer-readable storage medium stores a computer program, where the computer program, when executed by a processor, causes the processor to perform the method described above.

### BRIEF DESCRIPTION OF DRAWINGS

FIG. 1 is a schematic diagram showing part of the structure of a sending end and a receiving end in a wireless communication system in the related art;
FIG. 2A is a constellation diagram of 16 quadrature amplitude modulation (16QAM) in the related art;
FIG. 2B is a constellation diagram of 64QAM in the related art;
FIG. 3A is a schematic diagram showing an example of symbols in error in the related art;
FIG. 3B is a schematic diagram showing another example of symbols in error in the related art;
FIG. 4A is a schematic diagram of mapping an RS (15, K) codeword based on a field GF (2⁴) to 16QAM modulation symbols in the related art;
FIG. 4B is a schematic diagram of mapping an RS (255, K) codeword based on a field GF (2⁸) to 64QAM modulation symbols in the related art;
FIG. 5 is a flowchart of a data processing method according to an embodiment of the present application;
FIG. 6A is an example flowchart of another data processing method according to an embodiment of the present application;
FIG. 6B is an example flowchart of another data processing method according to an embodiment of the present application;
FIG. 6C is an example flowchart of another data processing method according to an embodiment of the present application;
FIG. 7A is a schematic diagram of an implementation manner of an operation 102-1 according to an embodiment of the present application;
FIG. 7B is a schematic diagram of another implementation manner of an operation 102-1 according to an embodiment of the present application;
FIG. 8A is a schematic diagram of a specific example of an operation 102-1 in another implementation manner according to an embodiment of the present application;
FIG. 8B is a schematic diagram of a specific example of an operation 102-1 in another implementation manner according to an embodiment of the present application;
FIG. 9A is a schematic diagram of a specific example of an operation 102-1 in another implementation manner according to an embodiment of the present application;
FIG. 9B is a schematic diagram of a specific example of an operation 102-1 in another implementation manner according to an embodiment of the present application;
FIG. 10A is a schematic diagram of a specific example of an operation 102-2 according to an embodiment of the present application;
FIG. 10B is a schematic diagram of another specific example of an operation 102-2 according to an embodiment of the present application;
FIG. 10C is a schematic diagram of another specific example of an operation 102-2 according to an embodiment of the present application;
FIG. 10D is a schematic diagram of another specific example of an operation 102-2 according to an embodiment of the present application;
FIG. 11A is a schematic diagram of a specific example of an operation 102-3 according to an embodiment of the present application;
FIG. 11B is a schematic diagram of another specific example of an operation 102-3 according to an embodiment of the present application;
FIG. 11C is a schematic diagram of another specific example of an operation 102-3 according to an embodiment of the present application;
FIG. 11D is a schematic diagram of another specific example of an operation 102-3 according to an embodiment of the present application;
FIG. 11E is a schematic diagram of another specific example of an operation 102-3 according to an embodiment of the present application;
FIG. 12 is another flowchart of a data processing method according to an embodiment of the present application;
FIG. 13 is a schematic diagram of a specific example of an operation 202 according to an embodiment of the present application;
FIG. 14 is another flowchart of a data processing method according to an embodiment of the present application; and
FIG. 15 is a block diagram of an electronic device according to an embodiment of the present application.

### DETAILED DESCRIPTION

In embodiments of the present application, when reliability levels of a modulation symbol are described, if the modulation symbol has only two reliability levels, the two reliability levels are described as a high reliability level and a low reliability level, as a highest reliability level and a lowest reliability level, as a reliability level being highest and a reliability level being lowest, or as a first reliability level and a second reliability level, where the high reliability level, the highest reliability level, the reliability level being highest, and the first reliability level have the same meaning, and the low reliability level, the lowest reliability level, the reliability level being lowest, and the second reliability level have the same meaning. If the modulation symbol has three reliability levels, the three reliability levels are described as a highest reliability level, a second highest reliability level, and a lowest reliability level, as a reliability level being highest, a reliability level being second highest, and a reliability level being lowest, or as a first reliability level, a second reliability level, and a third reliability level, where the highest reliability level, the reliability level being highest, and the first reliability level have the same meaning, the second highest reliability level, the reliability level being second highest, and the second reliability level have the same meaning, and the lowest reliability level, there liability level being lowest, and the third reliability level have the same meaning. If the modulation symbol has more than three reliability levels, the reliability levels are generally described, in descending order of reliability levels, as a first reliability level, a second reliability level, a third reliability level, a fourth reliability level and so on.

As described in the embodiments of the present application, a "symbol bit" refers to a bit of a symbol; a "codeword bit" refers to a bit of a codeword; and one codeword includes several symbols. Therefore, bits of the one codeword include bits of the several symbols.

Embodiments of the present disclosure provide a data processing method, so as to reduce a bit error rate of a symbol and improve data transmission performance in wireless communications.

The data processing method in the embodiments of the present disclosure is applied to various wireless communication systems, such as a New Radio (NR)system, Wireless Fidelity (Wi-Fi), Worldwide Interoperability for Microwave Access (WiMAX), a Global System for Mobile Communications (GSM), a code-division multiple access (CDMA) system, a wideband CDMA system, a wideband code-division multiple access (W-CDMA) system, a General Packet Radio Service (GPRS), a Long-Term Evolution(LTE) system, an LTE Advanced (LTE-A) system, a Universal Mobile Telecommunications System (UMTS), a cellular system related to the 3rd Generation Partnership Project (3GPP), and a 5th Generation (5G)system.

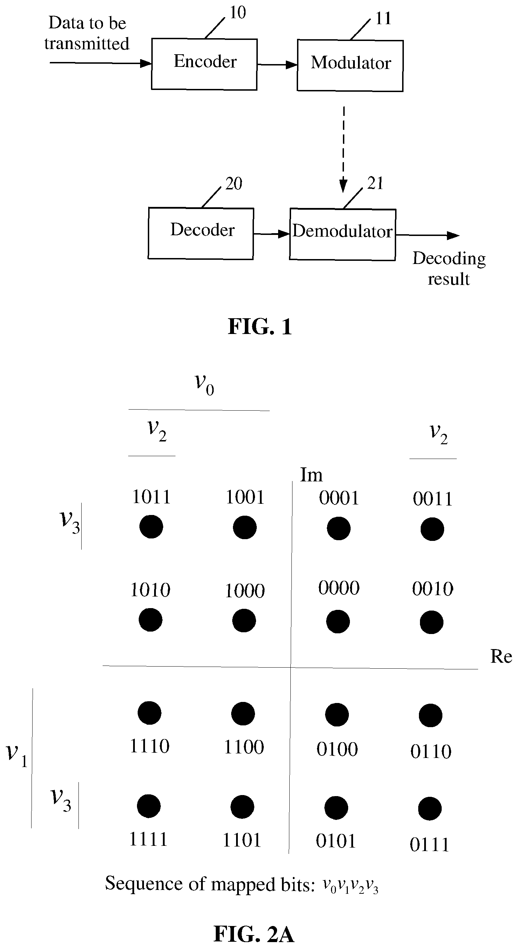

FIG. 1 is a schematic diagram showing part of the structure of a sending end and a receiving end in a wireless communication system in the related art. The sending end includes an encoder 10 and a modulator 11. The encoder 10 is configured to encode to-be-transmitted data to obtain a codeword. The modulator 11 is configured to modulate codeword bits to obtain a modulation symbol, map the modulation symbol to a resource unit, and send the modulation symbol. The receiving end includes a demodulator 20 and a decoder 21. The demodulator 20 is configured to receive the modulation symbol through the resource unit and demodulate the modulation symbol to obtain a bit sequence. The decoder 21 is configured to decode the bit sequence to obtain a decoding result. A type of the encoder 10 is determined by a coding scheme to be used in data transmission. The encoder 10 includes, for example, an encoder of low-density parity-check (LDPC) code, an encoder of polar code, an encoder of Reed-Solomon (RS) code, and an encoder of RaptorQ code. A type of the modulator 11 is determined by a modulation scheme to be used in data transmission. The modulator 11 includes, for example, an amplitude-shift keying (ASK) modulator, a frequency-shift keying (FSK) modulator, a phase-shift keying (PSK) modulator, and a quadrature amplitude modulation (QAM) modulator.

In a scenario of high-rate communication, a combination of a high-order modulation scheme and a high-rate error correction coding scheme is generally used at present. The high-order modulation scheme includes, for example, 16QAM, 64QAM, 256QAM, 1024QAM,4096QAM, 8192QAM, 16384QAM, 65536QAM, 32QAM, 128QAM, and 512QAM. The high-rate error correction coding scheme is, for example, error correction coding with a code rate greater than 1/2, such as an RS code.

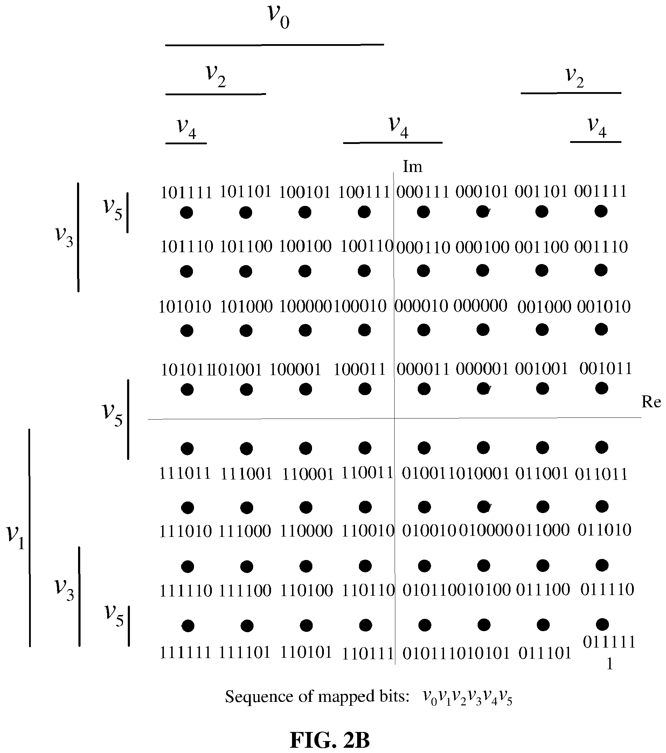

FIG. 2A is a constellation diagram of 16QAM, and each modulation symbol includes 4 bit positions. Therefore, 4 bitsv₀v₁v₂v₃ in the codeword are mapped to one 16QAM modulation symbol, that is, one modulation symbol carries 4 bits, and a sequence of mapped bits on the one modulation symbol is v₀v₁v₂v₃. However, the 4 bits have different reliabilities, where the reliability of v₀v₁ is higher while the reliability of v₂v₃ is lower. Similarly, FIG. 2B is a constellation diagram of 64QAM, and each modulation symbol includes 6 bit positions. Therefore, 6 bitsv₀v₁v₂v₃v₄v₅ in the codeword are mapped to one 64QAM modulation symbol, that is, one modulation symbol carries 6 bits, and a sequence of mapped bits on the one modulation symbol is v₀v₁v₂v₃v₄v₅.Similarly, the 6 bits have different reliabilities which are classified into three reliability levels, where v₀v₁ have the highest reliability, v₂v₃ have the second highest reliability, and v₄v₅have the lowest reliability. The high-order modulation has high spectral efficiency, but the bits in the high-order modulation have different reliabilities, which is not conducive to the subsequent error correction code decoding and may result in the modulation coding scheme with high spectral efficiency being far from the Shannon limit.

The RS code can implement a very high code rate, and the minimum distance of the RS code has a maximum value. Therefore, even if the simple hard decision decoding is used, very good performance can be achieved, and thus the RS code is very suitable for high-rate scenarios. However, the RS code also has the following deficiency: it is suitable for a scenario where a sudden error easily occurs, but it is not suitable for a scenario where a random error occurs. In other words, the RS code is suitable for a scenario where a series of bit errors easily occurs but is not suitable for a scenario where discrete bit errors occur. For example, a common RS code is an RS (255,239) code based on a field GF (2⁸), where one codeword corresponds to 2040 bits, and the erasure capability of the codeword is (255-239)/2 = 8 symbols. If 40 consecutive bits are in error, the 40 consecutive bits in error are concentrated in several symbols, and the number of the several symbols is less than or equal to 8, the RS code can still implement correction and thus correctly restore useful information bits. However, if bits in error are discrete, that is, distributed, for example, 9 bits are in error and the 9 bits in error are distributed in 9 symbols, the RS code cannot implement correction. It can be seen that the RS code has very different capabilities of correcting the burst error and the random error.

The RS code is described below in detail. The RS code is based on a Galois field, that is, a field GF (2*^{m}*). The field GF (2*^{m}*) includes 2*^{m}* field elements, and each field element includes m bits. Different primitive polynomials may generate different fields GF (2*^{m}*). For example, when m= 4, the field GF (2⁴) includes 16 field elements, and each field element includes 4 bits. Field elements of the field GF (2⁴) generated by one primitive polynomial are shown in Table 1 below.

**Table 1**

| | |
|---|---|
| Field element 1 | 0 0 0 0 |
| Field element 2 | 0 0 0 1 |
| Field element 3 | 0 0 1 0 |
| Field element 4 | 0 1 0 0 |
| Field element 5 | 1 0 0 0 |
| Field element 6 | 0 0 1 1 |
| Field element 7 | 0 1 1 0 |
| Field element 8 | 1 1 0 0 |
| Field element 9 | 1 0 1 1 |
| Field element 10 | 0 1 0 1 |
| Field element 11 | 1 0 1 0 |
| Field element 12 | 0 1 1 1 |
| Field element 13 | 1 1 1 0 |
| Field element 14 | 1 1 1 1 |
| Field element 15 | 1 1 0 1 |
| Field element 16 | 1 0 0 1 |

The length of the RS code based on the field GF (2*^{m}*) is generally (2*^{m}*-1) field elements of the field GF (2*^{m}*), where the field elements of the field GF (2*^{m}*) that compose the RS code may also be referred to as symbols. One field element of the field GF (2*^{m}*) or one symbol of the RS code based on the field GF (2*^{m}*) includes m bits, that is, the length of the RS code based on the field GF (2*^{m}*) is generally (2*^{m}*-1) m-bit symbols. Therefore, if the bit is used to calculate the length of the RS code, the length of the RS code is (2*^{m}*-1)×*m* bits, and the(2*^{m}*-1)×*m* bits may also be referred to as codeword bits of the RS code. For example, the length of the RS code based on the field GF (2⁴) is 15 field elements of the field GF (2⁴), that is, the number of bits of 15 four-bit symbols. Therefore, if the bit is used to calculate the length of the RS code based on the field GF (2⁴), the length of the RS code based on the field GF (2⁴) is 15×4 = 60 bits, and the 60 bits are codeword bits. The RS code may also support different code lengths and information bit lengths by shortening or puncturing.

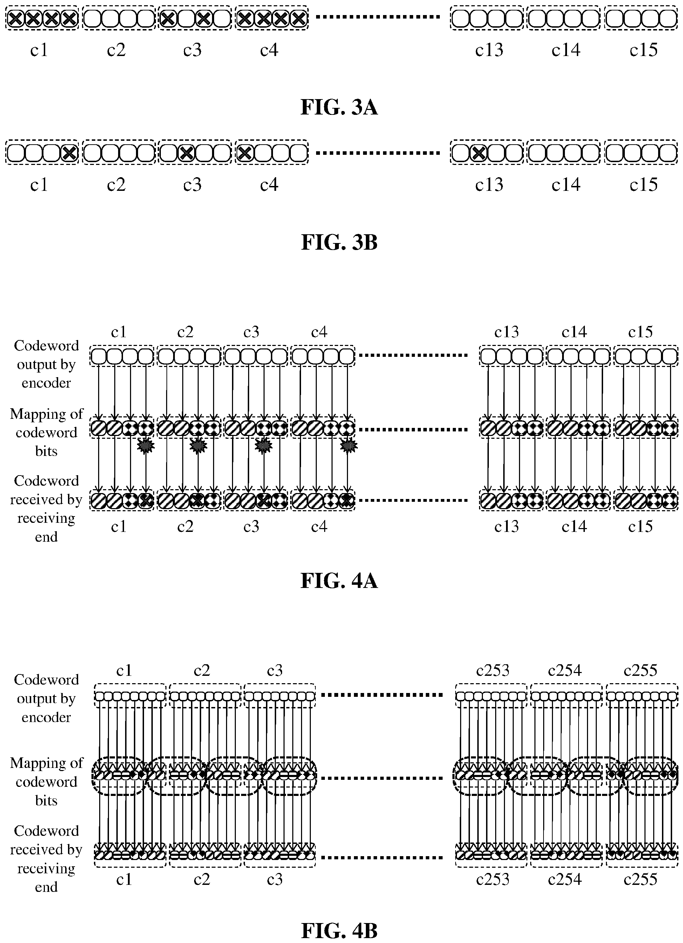

When an encoder of an RS (N, K) code takes K symbols as input and reproduces N symbols as output, an error correction capability of the encoder of the RS (N, K) code is equal to (N-K)/2 symbols. The encoder of the RS (15,9) code based on the field GF (2⁴) is used as an example. The encoder of the RS code takes 9 symbols as input and reproduces 15 symbols as output. It is assumed that the output symbols are c1, c2,..., and c15, where each symbol is a field element of the field GF (2⁴), that is, cᵢ belongs to the field GF (2⁴), and each symbol includes 4 bits, that is, cᵢ includes 4 bits. Here, the subscript i is greater than or equal to 1 and less than or equal to 15, that is, the encoder of the RS code outputs 60 bits in total. An error correction capability of the encoder of the RS (15,9) code based on the field GF (2⁴) is (15-9)/2 = 3 symbols, that is, if not more than three symbols are in error in a transmission process, the symbols received by the receiving end are no longer those sent by the sending end, but the receiving end may still recover 15 correct four-bit symbols and then translate them into 9 correct four-bit symbols. However, if more than three symbols are in error in the transmission process, such errors exceed the error correction capability of the RS code, and the RS decoder cannot decode the received symbols correctly. FIG. 3A and FIG. 3B show RS codewords received by the receiving end. Each circle represents one bit, and several bits, 4 bits here, enclosed by a dashed line constitute one symbol. If there is a "cross" symbol in a circle representing one bit, it indicates that the bit is in error during transmission. If any bit in one symbol is in error, the symbol is in error. FIG. 3A shows that 3 symbols are in error during transmission. In this case, the RS decoder at the receiving end may decode these received symbols correctly. FIG. 3B shows that 4 symbols are in error during transmission. In this case, the error correction capability of the RS (15,9) is exceeded, and the RS decoder at the receiving end cannot decode the received symbols correctly. Since one symbol is composed of multiple bits, 4 bits here, as long as one bit of the multiple bits is in error, the symbol is wrong. On the other hand, if 4 bits of one symbol are in error, the result is that one symbol is in error. As can also be seen from the drawings, up to 10 bits are in error in FIG. 3A, and only four bits are in error in FIG. 3B. However, the error bits in FIG. 3Aare basically sudden errors, that is, once an error occurs, a few consecutive bits are in error, while the error bits in FIG. 3Bare basically discrete errors, that is, basically every error bit results in one symbol being in error. It can be seen that the RS code has a strong error correction capability for sudden bit errors and a significantly reduced error correction capability for discrete bit errors. In addition, the RaptorQ code is similar to the RS code, and the RaptorQ code is also an error correction code based on a multivariate field. Although the minimum distance characteristic of the RaptorQ code is worse than the minimum distance characteristic of the RS code, the flexibility of the RaptorQ code may be better than the flexibility of the RS code. The RaptorQ code is also suitable for the scenario where sudden errors occur easily and has a relatively weak error correction capability for discrete bit errors.

A data processing manner in the related art is provided below. An RS (15,9) coding scheme and a 16QAM modulation scheme are used as an example. The RS (15,9) encoder receives the to-be-transmitted data, encodes the to-be-transmitted data, and outputs multiple RS codes in sequence, where each RS code is one codeword, and each codeword includes 15 four-bit symbols arranged in sequence. A 16QAM modulator modulates the 15 four-bit symbols in sequence into 15 16QAM modulation symbols.

In an example ass shown in FIG. 4A, each circle represents one bit, and 4 bits enclosed by a dashed line constitute one symbol. Filling the circle with slashes represents high reliability, and filling the circle with dots represents low reliability. The first row is illustrative of the codeword output from the RS encoder, the codeword includes 15 symbols, and each symbol includes 4 bits. Since the encoded bits have not been modulated and mapped, no filling in the circle represents a bit with no reliability indicated. The second row is illustrative of bit positions of the modulation symbols to which the codeword bits are mapped. In the first row, a total of 60 symbol bits of the 15 symbols output from the RS encoder may also be referred to as 60 codeword bits of one codeword. The 60 symbol bits are sequentially mapped to 60 bit positions of the 15 16QAM symbols. Therefore, the mapped 4 bits corresponding to each 16QAM modulation symbol have 2 bits with high reliability and 2 bits with low reliability. As shown in FIG. 4A, an "explosion shape" shown on a connection line between bits in the second row and the third row represents an error in bit transmission, and the inclusion of a "cross" in the circle in the third row indicates that this bit is in error. In the transmission of the RS codeword, 4 low-reliability bits are in error during transmission, and the 4 low-reliability bits are distributed in 4 symbols one to one. For each symbol, as long as one bit therein is in error, the symbol is in error. Therefore, in this transmission, although not so many bits are in error, 4 symbols in the RS codeword are in error, which exceeds the error correction capability of the RS code. As a result, the RS codeword cannot be corrected and the transmission fails.

A data processing manner in the related art is provided below. An RS (255, K) coding scheme based on the field GF (2⁸), such as an RS (255,223) codeword and an RS (255,239) codeword, and a 64QAM modulation scheme are used as an example.

In an example as shown in FIG. 4B, each circle represents one bit, and 8 bits enclosed by a dashed line constitute one symbol. Filling the circle with slashes represents the highest reliability, filling the circle with horizontal lines represents the second highest reliability, and filling the circle with dots represents the lowest reliability. The first row is illustrative of the codeword output from the RS encoder, the codeword includes 255 symbols, and each symbol includes 8 bits. Since the encoded bits have not been modulated and mapped, no filling in the circle represents a bit with no reliability indicated. The second row is illustrative of bit positions of modulation symbols to which codeword bits are mapped. In the first row, a total of 255×8= 2040 symbol bits of the 255 symbols output from the RS encoder may also be referred to as 2040 codeword bits of one codeword. The 2040 symbol bits are sequentially mapped to 2040 bit positions of 340 64QAM symbols. Therefore, the mapped 6 bits corresponding to each 64QAM modulation symbol have 2 bits with the highest reliability, 2 bits with the second highest reliability, and 2 bits with the lowest reliability. The third line represents 255 symbols received by the receiving end, where each symbol includes at least two bits with the lowest reliability, and four bits with the lowest reliability exist in some symbols, the bits with the lowest reliability are more likely to be in error, and for each symbol, as long as one bit therein is in error, the symbol is in error.

The applicant has found, through the research on such data processing manners in the related art, that an error of one symbol is more likely to be caused by an error of the bit with the lowest reliability in the symbol; once one bit with the lowest reliability in the symbol is in error, this symbol is in error; therefore, the more bits with the lowest reliability in the symbol, the greater the error probability. For one codeword, even if not a particularly large number of bits with the lowest reliability are in error, they may cause a relatively large number of symbols in error. As shown in FIG. 3B, the bits with the lowest reliability, which are in error, are distributed in different symbols and thus exceed the error correction capability of the error correction coding, resulting in a decoding failure. The applicant has also found that, from another perspective, in a process of mapping the codeword bits to the bit positions of the modulation symbols, the number of codeword bits is equal to the number of bit positions of the modulation symbols, for example, 60 codeword bits are mapped to 60 bit positions of higher-order modulation symbols, that is, in the case where the codeword bits are determined, the number of bit positions of the higher-order modulation symbols is also determined. In addition, since the same number of bit positions have one reliability level in each higher-order modulation symbol, among all the bit positions of the higher-order modulation symbols, the number of bit positions with the one reliability level is determined, that is, the number of bit positions with the lowest reliability level, which are more likely to be in error, is determined. As shown in FIG. 4A, the 15 16QAM symbols have 15×4 = 60 bit positions in total, which include 15×2 = 30 bit positions that have the lowest reliability level and 15×2 = 30 bit positions that have the highest reliability level. As shown in FIG. 4B,a total of 255×8 = 2040 bit positions include 2040/6×2 = 680 bit positions that have the lowest reliability level, 2040/6×2 = 680 bit positions that have the second lowest reliability level, and 2040/6×2 = 680 bit positions that have the highest reliability level. In the related art, it is equivalent to that each RS symbol includes the bit with the lowest reliability, and thus each RS symbol is easily in error. In addition, once discrete/distributed RS codeword bits are in error, a relatively large number of symbols may be in error, which is disadvantageous for the RS code, and thus the performance in the related art is not good.

In view of this, embodiments of the present application provide a data processing method, and the method is performed by a sending end. That the sending end maps bits of N symbols to bit positions of modulation symbols includes: mapping all bits of at least one symbol among the N symbols to bit positions of a modulation symbol that have the same reliability level, where N is an integer, and N > 1.

In the embodiments of the present application, all the bits of the at least one symbol among the N symbols are mapped to the bit positions of the modulation symbol that have the same reliability level. Since the N symbols include a determined number of bits with the lowest reliability level, in this manner, the bits that have the lowest reliability level can be at least partially aggregated, and the number of symbols with bit errors among the N symbols is reduced as much as possible, thereby reducing the overall bit error rate of the N symbols.

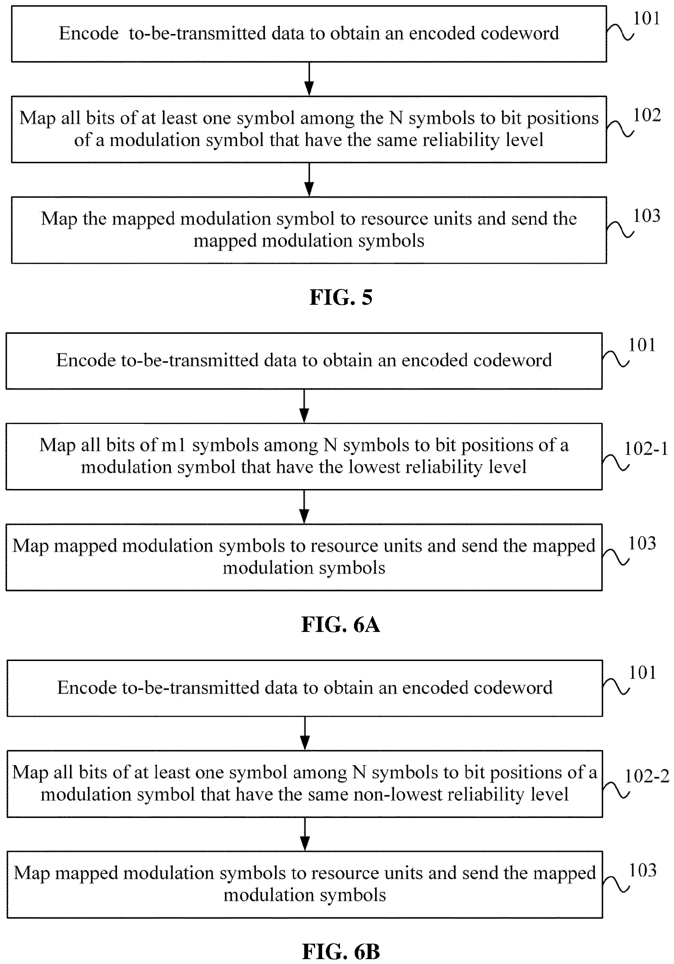

FIG. 5 is a flowchart of an example of a data processing method according to an embodiment of the present application. The flowchart includes operations 101 to 103. The operation 102 is an operation of mapping bits of N symbols to bit positions of modulation symbols mentioned in the data processing method of the present application.

In101, to-be-transmitted data is encoded to obtain an encoded codeword, where each codeword includes the N symbols.

In 102, mapping the bits of the N symbols to the bit positions of the modulation symbols includes at least mapping all bits of at least one symbol among the N symbols to bit positions of a modulation symbol that have the same reliability level.

In 103, the mapped modulation symbols are mapped to resource units and sent.

The operation 101 may be performed by an encoder in a sending end, the operation 103 may be performed by a modulator in the sending end, and the operation 102 may be performed by a data processing module in the sending end. The data processing module may be integrated into the modulator or another function device in the sending end, or the data processing module may be an independent device, for example, an independent chip.

In 101, the encoder may be an encoder that implements high-rate error correction coding, such as an RS encoder. The RS encoder encodes the to-be-transmitted data and then outputs multiple codewords, where each codeword includes the N symbols, and the number of bits included in each symbol is greater than or equal to 2. A value of N may be determined according to the number of symbols included in a single codeword. For example, in an RS coding scheme, in an RS (15, K) code based on a field GF (2⁴), each codeword includes 15 symbols, and N = 15; in an RS (255, K) code based on a field GF (2⁸), each codeword includes 255 symbols, and N = 255. Alternatively, the value of N may be the number of symbols in a codeword obtained through encoding by another coding scheme. Alternatively, the value of N may not be the number of symbols in one codeword but a value determined in another manner. The encoder is, for example, an encoder of an RS code or an encoder of a RaptorQ code. Therefore, the symbol is, for example, an RS symbol or a RaptorQ symbol.

In 102, the modulation symbol includes bit positions that have two or more different reliability levels. As shown in FIG. 2A, in 16QAM modulation, bit positions that have two reliability levels are included. As shown in FIG. 2B, in 64QAM modulation, bit positions that have three reliability levels are included. The same reliability level may be a lowest reliability level or may be a non-lowest reliability level. The lowest reliability level refers to a level having the lowest reliability among all reliability levels of the modulation symbol, and the non-lowest reliability level refers to each reliability level other than the lowest reliability level among all the reliability levels of the modulation symbol. As shown in FIG. 2A, bit positions where v₂v₃are located have the lowest reliability level in a16QAM modulation symbol, and bit positions where v₀v₁are located is have the non-lowest reliability level in the 16QAM modulation symbol. As shown in FIG. 2B, bit positions where v₄v₅are located have the lowest reliability level in a 64QAM modulation symbol, and bit positions where v₀v₁are located and bit positions where v₂v₃are located have the non-lowest reliability level in the 64QAM modulation symbol.

The modulation symbol may be of different modulation schemes, for example, may be an M-quadrature amplitude modulation (QAM) symbol, where M is a W-th power of 2, and W is an integer greater than or equal to 4. When W is a positive even number, W bits v₀v₁v₂v₃...v_{W-2}v_{W-1} may include W/2 reliability levels, and each reliability level includes 2 bits. For example, the M-QAM symbol includes the 16QAM modulation symbol, the 64QAM modulation symbol, a 256QAM modulation symbol, a 1024QAM modulation symbol, a 4096QAM modulation symbol, a 16384QAM modulation symbol, a 65536QAM modulation symbol, and the like, or the M-QAM symbol may include a 32QAM modulation symbol, a 128QAM modulation symbol, a 512QAM modulation symbol, and the like. In the embodiments of the present application, in a process of modulating the symbols by using the M-QAM symbol, the number of bits included in a single symbol is greater than 2.

All bits of one symbol among the N symbols may be mapped to the bit positions of the modulation symbol that have the same reliability level. Alternatively, all bits of two or more symbols among the N symbols may be mapped to the bit positions of the modulation symbol that have the same reliability level, and the two or more symbols may be consecutive symbols or may be inconsecutive symbols.

In 103, multiple mapped modulation symbols exist, and the modulator maps the multiple modulation symbols to multiple resource units and sends the multiple modulation symbols, where each modulation symbol is mapped to one resource unit. The resource unit includes a time domain resource and a frequency domain resource, and the modulator sends the modulation symbols on corresponding time domain resources based on subcarriers of frequency domain resources in the resource units. The modulation symbols sent based on the subcarriers may be referred to as a modulated signal.

In the embodiments of the present application, the operation 102 may separately include: mapping all bits of m1 symbols among the N symbols to bit positions of the modulation symbol that have the lowest reliability level, which is denoted as an operation 102-1, as shown in FIG. 6A. In this example, at least part of bits that have the lowest reliability level are concentrated in the at least one symbol, so that bits that have the lowest reliability level and mapped to other symbols are as few as possible, so as to reduce bit error rates of the other symbols as much as possible. Therefore, the number of symbols with bit errors among the N symbols can be reduced, the overall bit error rate of the N symbols can be reduced, and thus the data transmission performance can be improved.

In the embodiments of the present application, the operation 102 may separately include: mapping all the bits of the at least one symbol among the N symbols to bit positions of the modulation symbol that have the same non-lowest reliability level, which is denoted as an operation 102-2, as shown in FIG. 6B. In this example, the at least one symbol does not include the bits that have the lowest reliability level, and the bit error rate of the at least one symbol is relatively low, that is, the following case is avoided: the bits that have the lowest reliability level are mapped to all the symbols, and thus the reliability of each symbol is affected by the bit that has the lowest reliability level. Therefore, the number of symbols with bit errors among the N symbols can be reduced, the overall bit error rate of the N symbols can be reduced, and thus the data transmission performance can be improved.

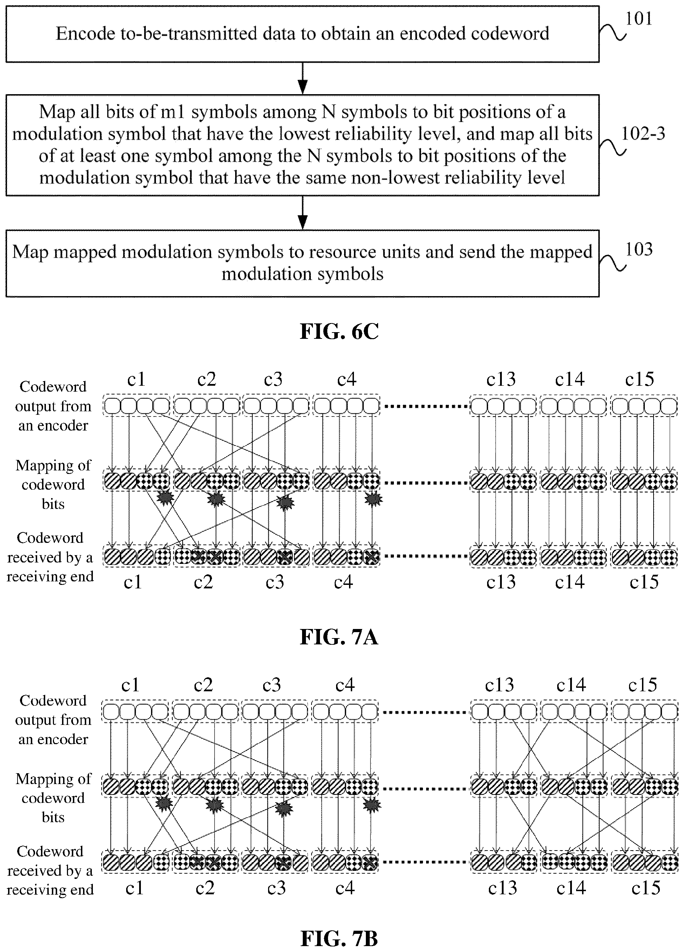

In the embodiments of the present application, the operation 102 may include both of mapping all bits of m1 symbols among the N symbols to bit positions of the modulation symbol that have the lowest reliability level and mapping all the bits of the at least one symbol among the N symbols to bit positions of the modulation symbol that have the same non-lowest reliability level, which is denoted as an operation 102-3, as shown in FIG. 6C. In this example, at least part of the bits the lowest reliability level may be concentrated in the at least one symbol, so that the bits that have the lowest reliability level and mapped to the other symbols are as few as possible. Moreover, the at least one symbol does not include the bits with the lowest reliability level so that the bit error rate of the at least one symbol is relatively low. Therefore, the number of symbols with bit errors among the N symbols can be reduced, the overall bit error rate of the N symbols can be reduced, and thus the data transmission performance can be improved.

In 102, all the bits of the at least one symbol may be mapped to bit positions of multiple modulation symbols that have the same reliability level.

In 102, the modulation symbol may be an M-QAM symbol, where M is a W-th power of 2, and W is an integer greater than or equal to 4. The M-QAM symbol includes a 16QAM modulation symbol, a 64QAM modulation symbol, a 256QAM modulation symbol, a 1024QAM modulation symbol, a 4096QAM modulation symbol, a 16384QAM modulation symbol, a 65536QAM modulation symbol, and the like, or M-QAM may include 32QAM, 128QAM, 512QAM, and the like. When the M-QAM symbol is the 16QAM modulation symbol, the 64QAM modulation symbol, the 256QAM modulation symbol, the 1024QAM modulation symbol, the 4096QAM modulation symbol, the 16384QAM modulation symbol, or the 65536QAM modulation symbol, each reliability level includes two bit positions. In this case, the number of all the bits of the at least one symbol is T, and T bits are mapped to bit positions of T/2 M-QAM symbols that have the same reliability level.

The operation 102-1 is illustrated and described below.

For example, in FIG. 7A, an RS (15, K) codeword based on a field GF (2⁴) and a 16QAM modulation scheme are used as an example, that is, N = 15. The RS (15, K) codeword is, for example, an RS (15, 9) codeword, and bits of 15 symbols are mapped to bit positions of modulation symbols. In this example, m1 = 1, and the one symbol is c2, that is, all bits of a symbol c2 are mapped to bit positions of modulation symbols that have the lowest reliability level. A symbol c1 and a symbol c3 each include one bit with the lowest reliability level. In other possible examples, the one symbol all the bits of which are mapped to the bit positions of the modulation symbols that have the lowest reliability level may be any one symbol of the 15 symbols.

Specifically, among 4 bits of the symbol c2, the first two bits are mapped to bit positionsv₂v₃ of the first modulation symbol that have the lowest reliability level, and the last two bits are mapped to bit positionsv₂v₃ of the second modulation symbol that have the lowest reliability level, that is, the number T of all bits of the symbol c2is equal to 4, and the 4 bits are mapped to bit positionsv₂v₃ of two 16QAMmodulation symbols that have the lowest reliability level. Moreover, the first two bits of the symbol c1 are mapped to bit positionsv₀v₁of the first modulation symbol that have the non-lowest reliability level, the third bit of the symbol c1 is mapped to a bit position v₀of the second modulation symbol that has the non-lowest reliability level, and the fourth bit of the symbol c1 is mapped to a bit position v₃ of the third modulation symbol that has the lowest reliability level.

The fourth bit of the symbol c3 is mapped to a bit position vi of the second modulation symbol that has the non-lowest reliability level. Symbols c4 to c5 are still mapped according to a sequence of symbol bits output from the encoder.

In this example, one bit of the symbol c1 that has the lowest reliability level and one bit of the symbol c3 that has the lowest reliability level are concentrated in the symbol c2. Compared with the case where the symbol c1 and the symbol c3 each include 2 bits that have the lowest reliability level in a mapping manner in the related art, the bits of the symbol c1 and the symbol c3 that have the lowest reliability level are reduced, bit error rates of the symbol c1 and the symbol c3 are reduced, and therefore, the overall bit error rate of the 15 symbols can be reduced.

For example, in FIG. 7B, the RS (15, K) codeword based on the field GF (2⁴) and the 16QAM modulation scheme are used as an example, that is, N = 15. The RS (15, K) codeword is, for example, the RS (15, 9) codeword, and the bits of the 15 symbols are mapped to the bit positions of the modulation symbols. In this example, m1 = 2, and the two2 symbols are c2 and c14, that is, all bits of a symbol c2 and a symbol c14 are mapped to bit positions of modulation symbols that have the lowest reliability level. A symbol c1, a symbol c3, a symbol c13, and a symbol c15 each include one bit that has the lowest reliability level. In other possible examples, the two symbols all the bits of which are mapped to the bit positions of the modulation symbols that have the lowest reliability level may be any two symbols of the 15 symbols.

Specifically, the bits in the symbol c1 and the bits in the symbol c3 are mapped in the same manner as those in FIG. 7A, and the details are not repeated. Among 4 bits of the symbol c14, the first bit is mapped to a bit position v₂ of the 13th modulation symbol that has the lowest reliability level, and the second bit is mapped to a bit position v₂of the 15th modulation symbol that has the lowest reliability level. Moreover, the third bit of the symbol c13 is mapped to a bit positionv₀ of the 14th modulation symbol that has the non-lowest reliability level, and the third bit of the symbol c15 is mapped to a bit position v₁ of the 14th modulation symbol that has the non-lowest reliability level. The remaining symbols are still mapped according to the sequence of symbol bits output from the encoder.

In this example, one bit of the symbol c1 that has the lowest reliability level and one bit of the symbol c3 that has the lowest reliability level are concentrated in the symbol c2, and one bit of the symbol c13 that has the lowest reliability level and one bit of the symbol c15 that has the lowest reliability level are concentrated in the symbol c14. Compared with the case where the symbol c1, the symbol c3, the symbol c13, and the symbol c15each include two bits that have the lowest reliability level in the mapping manner in the related art, the bits of the symbol c1, the symbol c3, the symbol c13, and the symbol c15that have the lowest reliability level are reduced, bit error rates of the symbol c1, the symbol c3, the symbol c13, and the symbol c15 are reduced, and therefore, the overall bit error rate of the 15 symbols can be reduced.

In an example, a value of m1 satisfies the following condition: the number of the bit positions of the modulation symbol that have the lowest reliability level is greater than or equal to the number of bits of the m1 symbols and is less than the number of bits of (m1+1) symbols among the N symbols. In this example, the bits that have the lowest reliability level can be concentrated in as few symbols as possible, that is, the number of symbols that do not include bits with the lowest reliability level can be as large as possible, so that the number of symbols that have a low bit error rate is as large as possible, and the bit error rate of the symbols in the codeword is reduced as much as possible.

Two cases are included here, which are described in detail below.

In the first case, the number of the bit positions of the modulation symbol that have the lowest reliability level is equal to the number of bits of the m1 symbols, which indicates that the number of the bit positions of the modulation symbol that have the lowest reliability level is an integer multiple of the number of bits in each symbol.

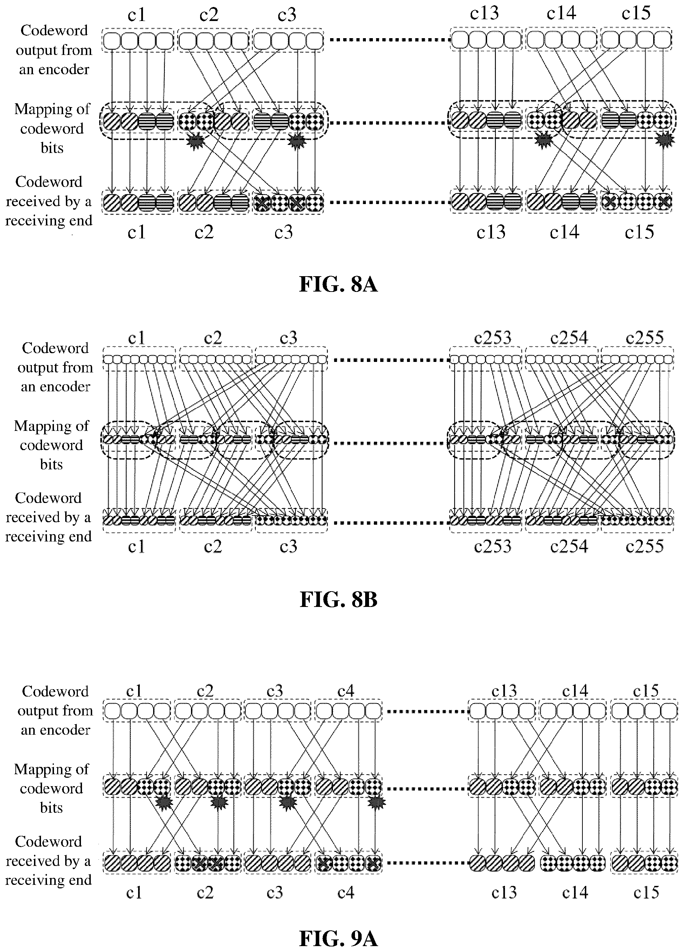

For example, as shown in FIG. 8A, the RS (15, K) codeword based on the field GF (2⁴) and a 64QAM modulation scheme are used as an example, that is, N = 15. The RS (15, K) codeword is, for example, the RS (15, 9) codeword, and the bits of the 15 symbols are mapped to the bit positions of the modulation symbols. In FIG. 8A, the first row includes 15 symbols c1, c2, c3..., and c15, and each symbol includes 4 bits. Each modulation symbol in the second row includes 6 bit positions, and the 6 bit positions of each modulation symbol include two bit positions that have a first reliability level, two bit positions that have a second reliability level, and two bit positions that have a third reliability level. The third row includes 15 symbols c1, c2, c3..., and c15 received by the receiving end. In this example, the number of bit positions of the modulation symbols is the same as the number of symbol bits of the 15 symbols, that is, the number of bit positions is 15×4 = 60, the number of modulation symbols is 60/6 = 10, and the number of bit positions that have the lowest reliability level is 10×2 = 20. The 20 bit positions that have the lowest reliability level are concentrated in the m1 symbols, and m1 = 20/4 = 5, that is, all bits of 5 symbols among the 15 symbols are mapped to the bit positions that have the lowest reliability level. The 5 symbols may be any 5 symbols among the 15 symbols. The5 symbols shown in FIG. 8A are c3, c6, c9, c12, and c15, separately. Mapping manners of bits of the remaining 10 symbols are not limited, and bits in each symbol of the remaining 10 symbols shown in FIG. 8A are mapped to the bit positions that have the first reliability level and the bit positions that have the second reliability level.

Specifically, every3 symbols are in one group, the 15 symbols may be divided into 5 groups in total, and symbol bits in each group are mapped in the same manner. An example in which the symbols c1, c2, and c3 are in one group is used, and the mapping manner is as follows: four bits of the symbol c1 are sequentially mapped to the first to fourth bit positionsv₀v₁v₂v₃ of the first modulation symbol, four bits of the symbol c2 are sequentially mapped to the first to fourth bit positionsv₀v₁v₂v₃ of the second modulation symbol, the first two bits of the symbol c3 are mapped to the fifth and sixth bit positions v₄v₅ of the first modulation symbol, and the last two bits of the symbol c3 are mapped to the fifth and sixth bit positions v₄v₅ of the second modulation symbol. In this manner, the bits that have the lowest reliability level in the group of symbols c1, c2, and c3are concentrated in the symbol c3, and the symbol c1 and the symbol c2 include only bits that have the non-lowest reliability level.

If a bit position v₃ of the first modulation symbol and a bit position v₃ of the second modulation symbol are in error, since the two bit positions are both concentrated in the symbol c3, only the symbol 3 is in error. If the codeword bits output from the encoder are sequentially mapped as in the related art, the bit position v₃ of the first modulation symbol and the bit positionv₃ of the second modulation symbol are distributed in the symbol c2 and the symbolc3 respectively, and then both the symbol c2 and the symbol c3 are in error. Compared with the related art, the example solution yields a significantly lower bit error rate of symbols in the codeword when the same number of bits that have the lowest reliability level are in error.

For example, as shown in FIG. 8B, an RS (255, K) codeword based on a field GF (2⁸) and a 64QAM modulation scheme are used as an example, that is, N = 255. The RS (255, K) codeword is, for example, an RS (255,223) codeword or an RS (255,239) codeword, and bits of 255 symbols are mapped to bit positions of modulation symbols. In FIG. 8B, the first row includes 255 symbols c1, c2, c3..., and c255, and each symbol includes 8 bits. Each modulation symbol in the second row includes 6 bit positions, and the 6 bit positions of each modulation symbol include two bit positions that have the first reliability level, two bit positions that have the second reliability level, and two bit positions that have the third reliability level. The third row includes 255 symbolsc1, c2, c3..., and c255 received by the receiving end. In this example, the number of bit positions of the modulation symbols is the same as the number of symbol bits of the 255 symbols, that is, the number of bit positions is 255×8 = 2040, the number of modulation symbols is 2040/6 = 340, and the number of bit positions that have the lowest reliability level is 340×2 = 680.The 680 bit positions that have the lowest reliability level are concentrated in the m1 symbols, and m1 = 680/8 = 85, that is, all bits of 85 symbols among the 255 symbols are mapped to the bit positions that have the lowest reliability level, where the 85 symbols may be any 85 symbols among the 255 symbols. The 85 symbols shown in FIG. 8B are c3, c6, c9..., and c255.Mapping manners of bits of the remaining 170 symbols are not limited, and bits in each symbol of the remaining 170 symbols shown in FIG. 8B are mapped to the bit positions that have the first reliability level and the bit positions that have the second reliability level.

Specifically, every 3 symbols are in one group, the 255 symbols may be divided into 85 groups in total, and symbol bits in each group are mapped in the same manner. An example in which the symbols c1, c2, and c3 are in one group is used, and the mapping manner is as follows: every 3 symbols are in one group, for example, the symbols c1, c2, and c3 are in one group, the first four bits of the symbol c1 are sequentially mapped to the first to fourth bit positions v₀v₁v₂v₃ of the first modulation symbol, the last four bits of the symbol c1 are sequentially mapped to the first to fourth bit positionsv₀v₁v₂v₃ of the second modulation symbol, the first four bits of the symbol c2 are sequentially mapped to the first to fourth bit positions v₀v₁v₂v₃ of the third modulation symbol, the last four bits of the symbol c2 are sequentially mapped to the first to fourth bit positions v₀v₁v₂v₃ of the fourth modulation symbol, and eight bits of the symbol c3 are sequentially mapped to eight bit positions of the four modulation symbols that have the lowest reliability level. In this manner, the bits that have the lowest reliability level in the group of symbols c1, c2, and c3 are concentrated in the symbol c3, and the symbol c1 and the symbol c2 include only bits that have the non-lowest reliability level. In FIG. 8B, if the bit position v₃ of the first modulation symbol and the bit position v₃ of the second modulation symbol are in error, since the two bit positions are both concentrated in the symbol c3, only the symbol 3 is in error. However, if the codeword bits output from the encoder are sequentially mapped as in the related art, the bit position v₃ of the first modulation symbol and the bit position v₃ of the second modulation symbol are distributed in the symbol c1 and the symbol c2, and thus the symbol c1 and the symbol c1 are in error. Compared with the related art, the example solution yields a significantly lower bit error rate of symbols in the codeword when the same number of bits that have the lowest reliability level are in error.

In the second case, the number of the bit positions of the modulation symbol that have the lowest reliability level is greater than the number of bits of the m1 symbols and is less than the number of bits of the (m1+1) symbols, which indicates that the number of the bit positions of the modulation symbol that have the lowest reliability level is not an integer multiple of the number of bits in each symbol.

For example, as shown in FIG. 9A, the RS (15, K) codeword based on the field GF (2⁴) and the16QAM modulation scheme are used as an example, that is, N = 15. The RS (15, K) codeword is, for example, the RS (15, 9) codeword, and the bits of the 15 symbols are mapped to the bit positions of the modulation symbols. In FIG. 9A, the first row includes 15 symbols c1, c2, c3,..., and c15, and each symbol includes 4 bits. Each modulation symbol in the second row includes 4 bit positions, and the 4 bit positions of each modulation symbol include two bit positions that have a high reliability level and two bit positions that have a low reliability level. The third row includes 15 symbols c1, c2, c3,..., and c15 received by the receiving end. In this example, the number of bit positions of the modulation symbols is the same as the number of symbol bits of the 15 symbols, that is, the number of bit positions is 15×4 = 60, the number of modulation symbols is 60/6 = 10, the number of bit positions that have the lowest reliability level is 10×2 = 30, each symbol has 4 bits, and therefore, the number 30 of bit positions that have the lowest reliability level is not an integer multiple of 4. In this case, 30 bit positions that have the low reliability level are divided into two parts: one part includes 28 bit positions that have the low reliability level, which may be concentrated in 7 symbols, that is, m1 = 7; the other part includes 2 bit positions that have the low reliability level, and the 2 bit positions that have the low reliability level are a difference value between the number of bit positions that have the lowest reliability level and the number of bits of the m1 symbols, which may be denoted as L. The L bit positions that have the low reliability level and another 2 bit positions that have the high reliability level may be concentrated in one symbol. The 7 symbols may be any 7 symbols of the 15 symbols, and the one symbol is any one symbol other than the 7 symbols among the 15 symbols. The 7 symbols shown in FIG. 9A are c2, c4, c6, c8, c10, c12, and c14, the one symbol is c15, and all bits of the remaining 7 symbols may be mapped to bit positions that have the high reliability level.

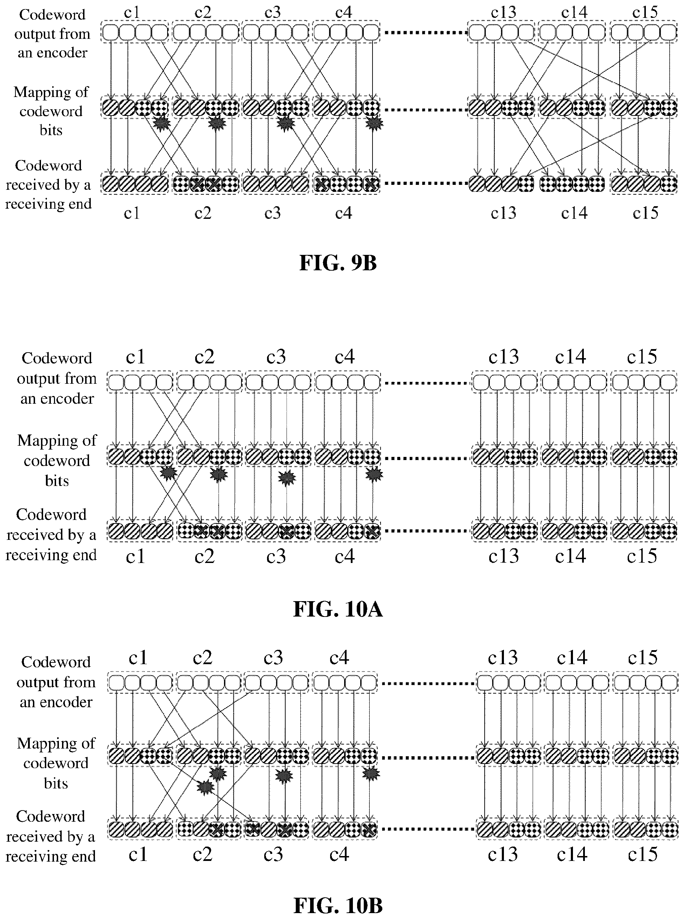

In another example, L bits that have the lowest reliability level may be distributed in different symbols. In an example shown in FIG. 9B, a difference from the example shown in FIG. 9A lies in that the 2 bit positions that have the low reliability level in the other part are distributed in two symbols and are specifically distributed in symbols c13 and c15. However, it is not limited thereto. The 2 symbols may be any two symbols other than the 7 symbols among the 15 symbols.

Compared with the solution where the L symbols that have the lowest reliability level are distributed in several symbols, the solution where the L symbols that have the lowest reliability level are concentrated in one symbol can reduce the number of symbols including bits that have the lowest reliability level, that is, reduce the number of symbols with a relatively high error probability, thereby reducing the overall bit error rate of the N symbols and improving the transmission performance. The transmission performance in the example shown in FIG. 9A is better than that in the example shown in FIG. 9B.

In an example, when the modulation symbol has three or more reliability levels, for example, when the modulation symbol may be the M-QAM symbol, where M is a W-th power of 2, and W is an even number greater than 4, the reliability levels of bit positions of the M-QAM symbol include W/2 reliability levels. For example, for the 64QAM modulation symbol, W = 6, and the reliability levels of bit positions of the modulation symbol include W/2 = 3 reliability levels; for the 56QAM modulation symbol, W = 8, and the reliability levels of bit positions of the modulation symbol include W/2 = 4 reliability levels; for the 1024QAM modulation symbol, W = 10, and the reliability levels of bit positions of the modulation symbol include W/2 = 5 reliability levels; for the 4096QAM modulation symbol, W = 12, and the reliability levels of bit positions of the modulation symbol include W/2 = 6 reliability levels; for the 16384QAM modulation symbol, W = 14, and the reliability levels of bit positions of the modulation symbol include W/2 = 7 reliability levels; and for the 65536QAM modulation symbol, W = 16, and the reliability levels of bit positions of the modulation symbol include W/2 = 8 reliability levels. All bits of one symbol among the N symbols are mapped to L bit positions of the modulation symbol that have the lowest reliability level and bit positions of the modulation symbol that have the non-lowest reliability level, which may be mapping L bits of the one symbol to the L bit positions of the modulation symbol that have the lowest reliability level, and mapping other bits of the one symbol than the L bits to bit positions of the modulation symbol that have the second lowest reliability level. The second lowest reliability level refers to a reliability level with the second lowest reliability among all the reliability levels of the modulation symbol. In this manner, a combination of a bit with a higher reliability level and the bit with the lowest reliability level can be avoided, that is, the accuracy of a symbol where the bit with the higher reliability level is located can be ensured as much as possible, thereby reducing the overall bit error rate of the N symbols.

Alternatively, in other examples, when the modulation symbol has three or more reliability levels, mapping all the bits of the one symbol among the N symbols to the L bit positions of the modulation symbol that have the lowest reliability level and to the bit positions of the modulation symbol that have the non-lowest reliability level may be mapping L bits of the one symbol to the L bit positions of the modulation symbol that have the lowest reliability level, and mapping other bits of the one symbol than the L bits to bit positions of the modulation symbol that have two non-lowest reliability levels.

A specific example of the operation 102-2 is provided below.

The same non-lowest reliability level in this operation may be any reliability level other than the lowest reliability level among all the reliability levels. For example, when two reliability levels are included in total, the non-lowest reliability level is the highest reliability level. When three reliability levels are included in total, the lowest reliability level is the third reliability level, and therefore, the non-lowest reliability level may be the first reliability level or the second reliability level. For example, when the modulation symbol may be the M-QAM symbol, where M is a W-th power of 2, and W is an even number greater than 4, the reliability levels of bit positions of the M-QAM symbol include W/2 reliability levels. For example, for the 64QAM modulation symbol, W = 6, and the reliability levels of bit positions of the modulation symbol include W/2 = 3 reliability levels. For the 256QAM modulation symbol, W = 8, and the reliability levels of bit positions of the modulation symbol include W/2 = 4 reliability levels. In this case, three non-lowest reliability levels exist. For the 1024QAM modulation symbol, W = 10, and the reliability levels of bit positions of the modulation symbol include W/2 = 5 reliability levels. In this case, four non-lowest reliability levels exist. For the 4096QAM modulation symbol, W = 12, and the reliability levels of bit positions of the modulation symbol include W/2 = 6 reliability levels. In this case, five non-lowest reliability levels exist. For the 16384QAM modulation symbol, W = 14, and the reliability levels of bit positions of the modulation symbol include W/2 = 7 reliability levels. In this case, six non-lowest reliability levels exist. For the 65536QAM modulation symbol, W = 16, and the reliability levels of bit positions of the modulation symbol include W/2 = 8 reliability levels. In this case, seven non-lowest reliability levels exist.

Specifically, the operation102-2 may include any combination of the following: mapping all bits of m2 symbols among the N symbols to bit positions of the modulation symbol that have the second lowest reliability level; mapping all bits of m3 symbols among the N symbols to bit positions of the modulation symbol that have a third lowest reliability level; mapping all bits of m4 symbols among the N symbols to bit positions of the modulation symbol that have a fourth lowest reliability level; mapping all bits of m5 symbols among the N symbols to bit positions of the modulation symbol that have a fifth lowest reliability level; mapping all bits of m6 symbols among the N symbols to bit positions of the modulation symbol that have a sixth lowest reliability level; mapping all bits of m7 symbols among the N symbols to bit positions of the modulation symbol that have a seventh lowest reliability level; or mapping all bits of m8 symbols among the N symbols to bit positions of the modulation symbol that have an eighth lowest reliability level; where m2, m3, m4, m5, m6, m7, and m 8 are each an integer greater than or equal to 1.

That is, if two reliability levels exist, the operation 102-2 may include: mapping all the bits of the m2 symbols among the N symbols to the bit positions of the modulation symbol that have the second lowest reliability level, where a value of m2 may be set according to a practical situation. If three reliability levels exist, the operation 102-2 may include one or a combination of the following cases: mapping all the bits of the m2 symbols among the N symbols to the bit positions of the modulation symbol that have the second lowest reliability level; and mapping all the bits of the m3 symbols among the N symbols to the bit positions of the modulation symbol that have the third lowest reliability level, where values of m2 and m3 may be set according to a practical situation. If four reliability levels exist, the operation 102-2 may include one or any combination of the following cases: mapping all the bits of the m2 symbols among the N symbols to the bit positions of the modulation symbol that have the second lowest reliability level; mapping all the bits of the m3 symbols among the N symbols to the bit positions of the modulation symbol that have the third lowest reliability level; and mapping all the bits of the m4 symbols among the N symbols to the bit positions of the modulation symbol that have the fourth lowest reliability level. In the case where more reliability levels exist, the rest may be deduced in the same manner, and the details are not repeated.

If two reliability levels exist, for example, as shown in FIG. 10A, the RS (15, K) codeword based on the field GF (2⁴) and the 16QAM modulation scheme are used as an example, that is, N = 15. The RS (15, K) codeword is, for example, the RS (15, 9) codeword. In this example, all the bits of the m2 symbols among the 15 symbols are mapped to the bit positions of the modulation symbol that have the second lowest reliability level, where m2 = 1, and the one symbol is the symbol c1. In the case where two reliability levels are included in total, the second lowest reliability level is the highest reliability level.

Specifically, among 4 bits of the symbol c1, the first two bits are mapped to bit positionsv₀v₁ of the first modulation symbol that have the highest reliability level, and the last two bits of the symbol c1 are mapped to bit positionsv₀v₁ of the second modulation symbol that have the highest reliability level. That is, the number T of all bits of the symbol c1is equal to 4, and the 4 bits are mapped to bit positionsv₀v₁ of two 16QAM modulation symbols that have the highest reliability level. Meanwhile, the first two bits of the symbol c2 are mapped to bit positionsv₂v₃ of the first modulation symbol that have the lowest reliability level, and the last two bits of the symbol c2 are mapped to bit positionsv₂v₃ of the second modulation symbol that have the lowest reliability level. The symbols c3 to c15 are still mapped according to the sequence of symbol bits output from the encoder. That is, in this example, all the bits of the symbol c1 are mapped to the bit positionsv₀v₁ of the modulation symbols that have the highest reliability level, and therefore, the symbol c1 has a much lower error probability than the other 14 symbols. It can be learned from the comparison between FIG. 10A and FIG. 4A that although a position v₃ of the first modulation symbol and a position v₂ of the second modulation symbol are in error during transmission, in FIG. 10A, since bits at the two positions in error are concentrated in the symbol c2, the bits at the two positions in error only cause the symbol c2 to be in error, and the symbol c1 is correct; while in FIG. 4A, since the bits at the two positions in error are distributed in the symbol c1 and the symbol c2, the bits at the two positions in error cause both the symbol c1 and the symbol c2 to be in error. Apparently, compared with the example shown in FIG. 4A, the example shown in FIG. 10A has a lower overall bit error rate and better data transmission performance.

In addition, two bit positions v₂v₃ of the first modulation symbol that have the lowest reliability level may be distributed in different symbols. In an example shown in FIG. 10B, a difference from the example of FIG. 10A is that in FIG. 10A, the first two bits of the symbol c2 are mapped to the bit positionsv₂v₃ of the first modulation symbol that have the lowest reliability level; while in FIG. 10B, the first bit of the symbol c2 is mapped to a bit position v₂of the first modulation symbol that has the lowest reliability level, the second bit of the symbol c2 is mapped to a bit position v₀ of the third modulation symbol that has the highest reliability level, the first bit of the symbol c3 is mapped to the bit position v₃ of the first modulation symbol that has the lowest reliability level, and the second bit of the symbol c3 is mapped to a bit position v₁ of the third modulation symbol that has the highest reliability level.

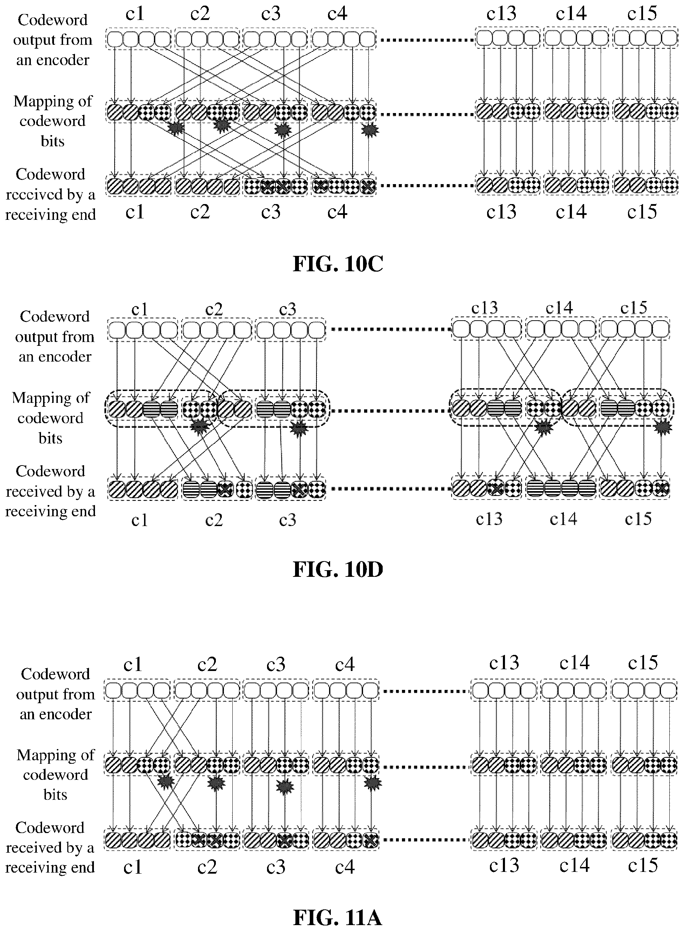

For example, as shown in FIG. 10C, the RS (15, K) codeword based on the field GF (2⁴) and the 16QAM modulation scheme are used as an example, that is, N = 15. The RS (15, K) codeword is, for example, the RS (15, 9) codeword. In this example, all the bits of the m2 symbols among the 15 symbols are mapped to the bit positions of the modulation symbol that have the second lowest reliability level, where m2 = 2, and the 2 symbols are the symbol c1 and the symbol c2. In the case where two reliability levels are included in total, the second lowest reliability level is the highest reliability level.

Specifically, among 4 bits of the symbol c1, the first two bits are mapped to bit positions v₀v₁ of the first modulation symbol that have the highest reliability level, and the last two bits are mapped to bit positions v₀v₁ of the third modulation symbol that have the highest reliability level; among 4 bits of the symbol c2, the first two bits are mapped to bit positions v₀v₁ of the second modulation symbol that have the highest reliability level, and the last two bits are mapped to bit positions v₀v₁ of the fourth modulation symbol that have the highest reliability level; meanwhile, the first two bits of the symbol c3 are mapped to bit positionsv₂v₃ of the first modulation symbol that have the lowest reliability level, the last two bits of the symbol c3 are mapped to bit position v₂v₃ of the third modulation symbol that have the lowest reliability level, the first two bits of the symbol c4 are mapped to bit positionsv₂v₃ of the second modulation symbol that have the lowest reliability level, and the last two bits of the symbol c4are mapped to bit positions v₂v₃ of the fourth modulation symbol that have the lowest reliability level; and the symbols c5 to c15 are still mapped according to the sequence of symbol bits output from the encoder. That is, in this example, all bits of the symbols c1 and c2 are mapped to bit positionsv₀v₁ of the modulation symbols that have the non-lowest reliability level, and therefore, the two symbols c1 and c2 have a much lower error probability than the other 12 symbols. It can be learned from the comparison between FIG. 10A and FIG. 4A that although the position v₃ of the first modulation symbol and the position v₂ of the second modulation symbol are in error during transmission, in FIG. 10C, since the bits at the two positions in error are concentrated in the symbol c3 and the symbol c4, separately, the bits at the two positions in error only cause the symbol c3 and the symbol c4 to be in error, and the symbol c1 and the symbol c2 are correct; while in FIG. 4A, since the bits at the two positions in error are distributed in the symbol c1 and the symbol c2, the two bits in error cause both the symbol c1 and the symbol c2 to be in error. Apparently, compared with the example shown in FIG. 4A, the example shown in FIG. 10C has the lower overall bit error rate and the better data transmission performance. Similarly, it can be learned from the comparison between FIG. 10C and FIG. 6Athat the symbol c1 and the symbol c2 in FIG. 10C are both correct, while in FIG. 10A, the symbol c1 is correct and the symbol c2 is in error. Apparently, the example shown in FIG. 10C has the lower overall bit error rate.

If three reliability levels exist, for example, as shown in FIG. 10D, the RS (15, K) codeword based on the field GF (2⁴) and the 64QAM modulation scheme are used as an example, that is, N = 15. The RS (15, K) codeword is, for example, the RS (15, 9) codeword. In this example, all the bits of the m2 symbols among the 15 symbols are mapped to the bit positions of the modulation symbol that have the second lowest reliability level, and all the bits of the m3 symbols among the 15 symbols are mapped to the bit positions of the modulation symbol that have the third lowest reliability level, where m2 = 1, the symbol is c1, m3 = 1, and the symbol is c14. In the case where three reliability levels are included in total, the second lowest reliability level is the second reliability level, that is, the second highest reliability level; the third lowest reliability level is the first reliability level, that is, the highest reliability level; and the lowest reliability level is the third reliability level.

Specifically, among 4 bits of the symbol c1, the first two bits are mapped to bit positions v₀v₁ of the first modulation symbol that have the first reliability level, and the last two bits are mapped to bit positions v₀v₁ of the second modulation symbol that have the first reliability level; and 4 bits of the symbol c2 are mapped to bit positions v₂v₃ of the first modulation symbol that have the second reliability level and bit positions v₄v₅ of the first modulation symbol that have the third reliability level, separately. Meanwhile, 4 bits of the symbol c13 are mapped to bit positions v₀v₁ of the ninth modulation symbol that have the first reliability level and bit positions v₄v₅ of the ninth modulation symbol that have the third reliability level, separately; among 4 bits of the symbol c14, the first two bits are mapped to bit positions v₂v₃ of the ninth modulation symbol that have the second reliability level, and the last two bits are mapped to bit positions v₂v₃ of the 10th modulation symbol that have the second reliability level; and 4 bits of the symbol c13 are mapped to bit positions v₀v₁ of the 10th modulation symbol that have the first reliability level and bit positions v₄v₅ of the 10th modulation symbol that have the third reliability level, separately. The remaining symbols are still mapped according to the sequence of symbol bits output from the encoder.

A specific example of the operation 102-3 is provided below.

For example, as shown in FIG. 11A, the RS (15, K) codeword based on the field GF (2⁴) and the 16QAM modulation scheme are used as an example, that is, N = 15. Two reliability levels are included in total, and the RS (15, K) codeword is, for example, the RS (15, 9) codeword. In this example, all the bits of the m1 symbols among the 15 symbols are mapped to the bit positions of the modulation symbol that have the lowest reliability level, and all the bits of the m2 symbols among the 15 symbols are mapped to the bit positions of the modulation symbol have the second reliability level, where m1 = 1, the symbol is c1, m2 = 1, and the symbol is c2. That is, the number T of all bits of the symbol c1is equal to 4, and 4 bits are mapped to bit positionsv₀v₁ of the first 16QAM modulation symbol and the second 16QAMmodulation symbol that have the highest reliability level; meanwhile, the number T of all bits of the symbol c2is equal to 4, and 4 bits are mapped to bit positionsv₂v₃ of the first 16QAM modulation symbol and the second 16QAMmodulation symbol that have the lowest reliability level.

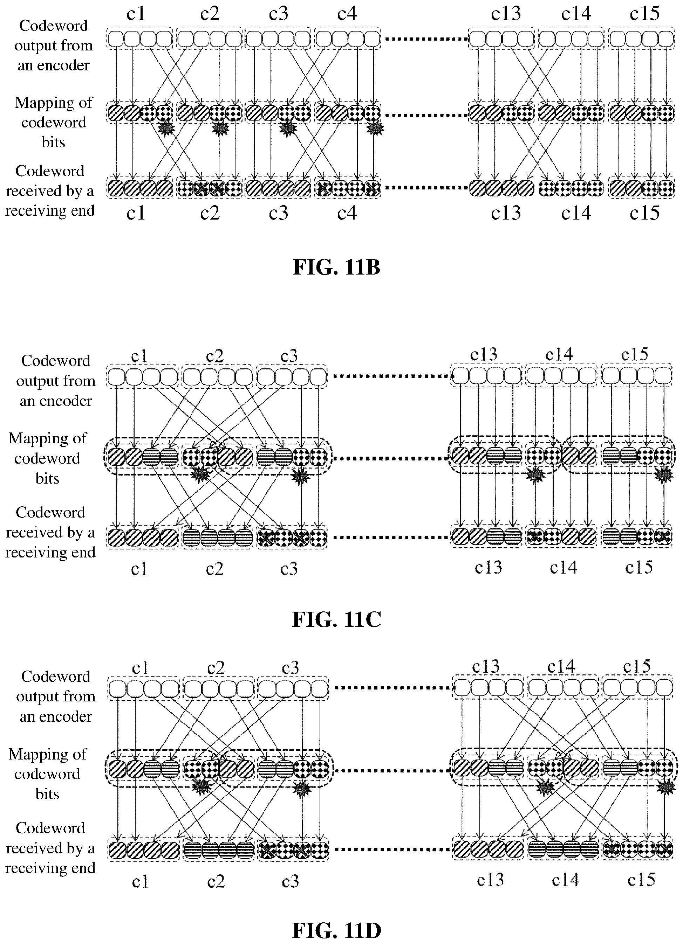

As shown in FIG. 11B, a difference between FIG. 11B and FIG. 11A lies in that in an example of FIG. 11B, m1 = 7 and the symbols are c1, c3, c5, c7, c9, c11, and c13; and m2 = 7 and the symbols are c2, c4, c6, c8, c10, c12, and c14.

For example, as shown in FIG. 11C, the RS (15, K) codeword based on the field GF (2⁴) and the 16QAM modulation scheme are used as an example, that is, N = 15. Three reliability levels are included in total, and the RS (15, K) codeword is, for example, the RS (15, 9) codeword. In this example, all the bits of the m1symbols among the 15 symbols are mapped to the bit positions of the modulation symbol that have the lowest reliability level, all the bits of the m2 symbols among the 15 symbols are mapped to the bit positions of the modulation symbol that have the second reliability level, and all the bits of the m3 symbols among the 15 symbols are mapped to the bit positions of the modulation symbol that have the third reliability level, where m1 = 1, the symbol is c1, m2 = 1, the symbol is c2, m3 = 1,and the symbol is c3.

As shown in FIG. 11D, a difference between FIG. 11D and FIG. 11C lies in that in an example of FIG. 11D, m1 = 5 and the symbols are c3, c6, c9, c12, and c15; m2 = 5 and the symbols are c2, c5, c8, c11, and c14; and m3 = 5 and the symbols are c1, c4, c7, c10, and c13.

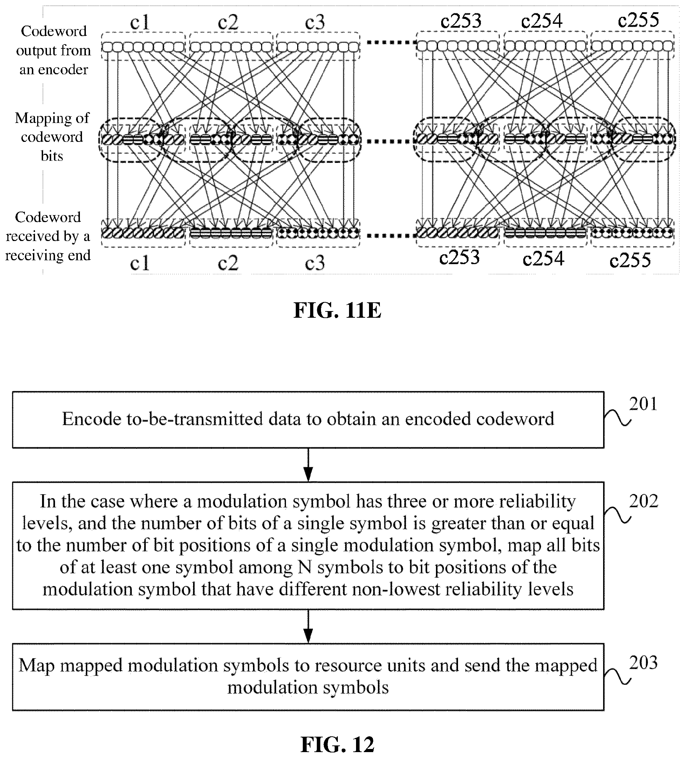

For example, as shown in FIG. 11E, the RS (255, K) codeword based on the field GF (2⁸) and the 64QAM modulation scheme are used as an example, and N = 255. The RS (255, K) codeword is, for example, the RS (255,223) codeword or the RS (255,239) codeword. In this example, all the bits of the m1 symbols among the 255 symbols are mapped to the bit positions of the modulation symbol that have the lowest reliability level, all the bits of the m2 symbols among the 15 symbols are mapped to the bit positions of the modulation symbol that have the second reliability level, and all the bits of the m3 symbols among the 15 symbols are mapped to the bit positions of the modulation symbol that have the third reliability level, where m1 = 85, and the m1 symbols are c3, c6, c9,..., and c255; m2 = 85 and the m2 symbols are c2, c5, c8,..., and c254; and m3 = 85 and the m3 symbols are c1, c4, c7,..., and c253. The example of FIG. 11E and the example of FIG. 8B use the same modulation and coding scheme, except that in FIG. 11E, other than680 bit positions of the modulation symbols that have the lowest reliability level, which are concentrated in 85 symbols, all bits of each symbol among the remaining 170 symbols are mapped to bit positions that have the same non-lowest reliability level.

Embodiments of the present application further provide a data processing method. In the case where a modulation symbol has three or more reliability levels, and the number of bits of a single symbol is greater than or equal to the number of bit positions of a single modulation symbol, an operation of mapping bits of N symbols to bit positions of modulation symbols includes: mapping all bits of at least one symbol among the N symbols to bit positions of the modulation symbol that have different non-lowest reliability levels. The at least one symbol does not include bits with the lowest reliability level, and the bit error rate of the at least one symbol is relatively low, that is, the following case is avoided: the bits that have the lowest reliability level are mapped to all the symbols, and thus the reliability of each symbol is affected by a bit that has the lowest reliability level. Therefore, the number of symbols with bit errors among the N symbols can be reduced, the overall bit error rate of the N symbols can be reduced, and thus the data transmission performance can be improved.

FIG. 12 is another flowchart of a data processing method according to an embodiment of the present application. The flowchart includes operations 201 to 203. The operation 202 is an operation of mapping bits of N symbols to bit positions of modulation symbols mentioned in the data processing method of the present application.

In 201, to-be-transmitted data is encoded to obtain an encoded codeword, where each codeword includes the N symbols.

In 202, in the case where a modulation symbol has three or more reliability levels, and the number of bits of a single symbol is greater than or equal to the number of bit positions of a single modulation symbol, all bits of at least one symbol among the N symbols are mapped to bit positions of the modulation symbol that have different non-lowest reliability levels.

In 203, the mapped modulation symbols are mapped to resource units and sent.

The operation 201 may be performed by an encoder in a sending end and is performed in a manner similar to that of the operation 101, and the details are not repeated. The operation 203 may be performed by a modulator in the sending end and is performed in a manner similar to that of the operation 103, and the details are not repeated. The operation 202 may be performed by a data processing module in the sending end, and the data processing module may be integrated into the modulator or another function device in the sending end, or the data processing module may be an independent device, for example, an independent chip. The operation 202 is different from the operation 102.

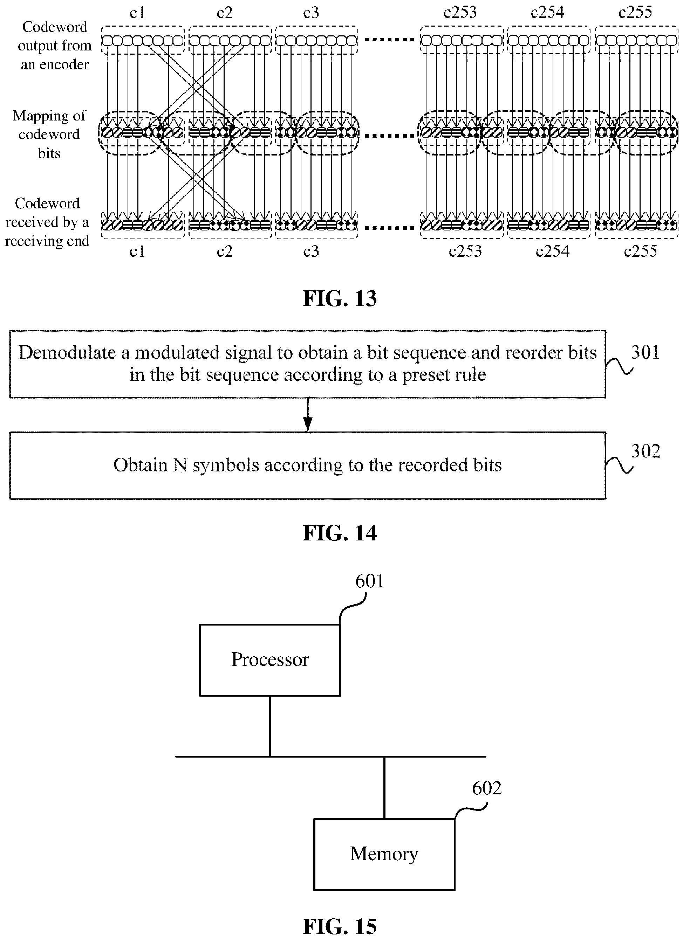

For example, as shown in FIG. 13, an RS (255, K) codeword based on a field GF (2⁸) and a 64QAM modulation scheme are used as an example, that is, N = 255. Three reliability levels are included in total, and the RS (255, K) codeword is, for example, an RS (255,239) codeword. A single symbol has 8 bits, and a single modulation symbol has 6 bit positions. In this example, all bits of a symbol c1 are mapped to bit positions that have a first reliability level and bit positions that have a second reliability level.

Specifically, among 8 bits of the symbol c1, the first bit and the second bit are mapped to bit positions v₀v₁ of the first modulation symbol that have the first reliability level, the third bit and the fourth bit are mapped to bit positions v₂v₃ of the first modulation symbol that have the second reliability level, the fifth bit and the sixth bit are mapped to bit positions v₀v₁ of the third modulation symbol that have the first reliability level, and the seventh bit and the eighth bit are mapped to bit positions v₀v₁ of the second modulation symbol that have the first reliability level; among 8 bits of a symbol c2, the first bit and the second bit are mapped to bit positions v₂v₃ of the second modulation symbol that have the second reliability level, the third bit and the fourth bit are mapped to bit positions v₄v₅ of the second modulation symbol that have a third reliability level, the fifth bit and the sixth bit are mapped to bit positionsv₄v₅of the second modulation symbol that have the third reliability level, and the seventh bit and the eighth bit are mapped to bit positionsv₂v₃ of the third modulation symbol that have the second reliability level; and symbols c3 to c255 are still mapped according to a sequence of symbol bits output from the encoder. Since the symbol c1 does not include a bit that has the third reliability level, the symbol c1 has a lower error probability than the other symbols.

In another case, for example, the modulation symbol has four reliability levels, and the four reliability levels are the first reliability level to a fourth reliability level, separately. The fourth reliability level is the lowest reliability level. The data processing module may map all the bits of the at least one symbol among the N symbols to bit positions that have any two reliability levels among the first reliability level, the second reliability level, and the third reliability level or to bit positions that have the three reliability levels, i.e., the first reliability level, the second reliability level, and the third reliability level. This is also true in the case where the modulation symbol has more reliability levels.

In the embodiments of the present application, in the operation of mapping the bits of the N symbols to the bit positions of the modulation symbols, the mapping to the corresponding bit positions may be implemented as follows: the data processing module reorders the symbol bits output from the encoder so that when the reordered symbol bits are sequentially mapped to the bit positions of the modulation symbols, all bits of m symbols are mapped to bit positions that have a non-lowest reliability level; where a reordering rule is preset, that is, the rule may be preset according to a set value of m and which modulation symbol the bits of the m symbols are separately mapped to.

For example, in the example shown in FIG. 7A, after the data processing module receives codeword bits output from the encoder, the codeword bits are reordered according to the following rule: the first two bits of a symbol c2 are adjusted to positions of the last two bits of a symbol c1, the third bit of the symbol c1 is adjusted to a position of the first bit of the symbol c2, the fourth bit of the symbol c1 is adjusted to a position of the fourth bit of a symbol c3, the fourth bit of the symbol c3 is adjusted to a position of the second bit of the symbol c2, and the remaining bits are not changed. Then, the reordered codeword bits are sequentially mapped to the bit positions of the modulation symbols. Table 2A shows a sequence of codeword bits before reordering and a sequence of codeword bits after reordering, separately, where bi denotes the i-th bit in the codeword, and every 4 bits constitute one symbol.

**Table 2A**

| | | | | | | | | | | | | | | |
|---|---|---|---|---|---|---|---|---|---|---|---|---|---|---|
| Before reordering | b1 | b2 | b3 | b4 | b5 | b6 | b7 | b8 | b9 | b10 | b11 | b12 | ... | b60 |
| After reordering | b1 | b2 | b5 | b6 | b3 | b12 | b7 | b8 | b9 | b10 | b11 | b4 | ... | b60 |

For another example, in the example shown in FIG. 11B, after the data processing module receives the codeword bits output from the encoder, the codeword bits are reordered according to the following preset rule: the last two bits of a symbol c1 are interchanged with the first two bits of a symbol c2 in position, the last two bits of a symbol c3 are interchanged with the first two bits of a symbol c4 in position, the last two bits of a symbol c5 are interchanged with the first two bits of a symbol c6 in position, ... ,and the last two bits of a symbol c13 are interchanged with the first two bits of a symbol c14 in position. Table 2B shows a sequence of codeword bits before reordering and a sequence of codeword bits after reordering, separately.

**Table 2B**

| | | | | | | | | | | | | | | |
|---|---|---|---|---|---|---|---|---|---|---|---|---|---|---|
| Before reordering | b1 | b2 | b3 | b4 | b5 | b6 | b7 | b8 | b9 | b10 | b11 | b12 | ... | b60 |
| After reordering | b1 | b2 | b5 | b6 | b3 | b4 | b7 | b8 | b9 | b10 | b13 | b14 | ... | b60 |

The operation 102 may be implemented in other manners. For example, the symbol bits output from the encoder do not need to be reordered but are directly mapped according to a preset rule. As shown in FIG. 11B, the first two bits of the symbol c2 are directly mapped to bit position v₂v₃ of the first modulation symbol that have the lowest reliability level, and the last two bits of the symbol c1 are directly mapped to bit positions v₀v₁ of the second modulation symbol that have the highest reliability level; the first two bits of the symbol c4 are directly mapped to bit positions v₂v₃ of the third modulation symbol that have the lowest reliability level, and the last two bits of the symbol c3 are directly mapped to bit positionsv₀v₁ of the fourth modulation symbol that have the highest reliability level; ...; the first two bits of the symbol c14 are directly mapped to bit positions v₂v₃ of the 13th modulation symbol that have the lowest reliability level, and the last two bits of the symbol c13 are directly mapped to bit positions v₀v₁ of the 14th modulation symbol that have the highest reliability level; and the remaining bits are mapped to original positions.

As shown in FIG. 14, embodiments of the present application further provide a data processing method. The method is performed by a receiving end. That the receiving end demodulates a modulated signal to obtain N symbols after the receiving end receives the modulated signal includes the operations described below.

In 301, the modulated signal is demodulated to obtain a bit sequence, and bits in the bit sequence are reordered according to a preset rule.

In 302, the N symbols are obtained according to the recorded bits.

The modulated signal is generated after a sending end processes the N symbols according to the data processing method described above, and the preset rule corresponds to a rule used in a process in which the sending end maps bits of the N symbols to bit positions of modulation symbols.

The receiving end includes a demodulator and a decoder. The operation 301 may be performed by a data processing module in the receiving end. The data processing module may be integrated into the demodulator or may be independent of the demodulator. For example, the data processing module may be an independent chip. The operation 302 may be performed by the decoder.

In 301, the data processing module is configured to receive the modulated signal and demodulate the modulated signal to obtain multiple modulation symbols. Specifically, the data processing module is configured to pre-store a constellation diagram of the sending end for generating the modulation symbols, and the data processing module is configured to demodulate the modulated signal by using the constellation diagram to obtain the multiple modulation symbols.

The data processing module is further configured to pre-store the preset rule for reordering the bits in the bit sequence. In the process in which the sending end maps the bits of the N symbols to the bit positions of the modulation symbols, the number of bits of the N symbols is the same as the number of bit positions of the modulation symbols, and the sending end maps the bits of the N symbols to the bit positions of the modulation symbols in one-to-one correspondence according to a certain rule. The preset rule for demodulation that is stored in the data processing module of the receiving end corresponds to the rule of the sending end for mapping codeword bits to the bit position of the modulation symbols.

Embodiments of the present application further provide a data processing module. The data processing module is configured to map bits of N symbols to bit positions of modulation symbols. In a process of mapping the bits of the N symbols to the bit positions of the modulation symbols, the data processing module is configured to map all bits of at least one symbol among the N symbols to bit positions of a modulation symbol that have the same reliability level, where N is an integer, and N>1.

In an example, all the bits of the at least one symbol are mapped to bit positions of multiple modulation symbols that have the same reliability level.

In an example, the modulation symbol includes at least two bits that have different reliability levels.

In an example, the number of bits included in each of the N symbols is greater than 2.

In an example, the modulation symbol is an M-QAM symbol, where M is a W-th power of 2, and W is an integer greater than or equal to 4.

In an example, the number of all the bits of the at least one symbol among the N symbols is T, and T bits are mapped to bit positions of T/2 M-QAM symbols that have the same reliability level.

The data processing module in this embodiment is disposed in a sending end and is a function module corresponding to the above-described data processing method performed by the sending end.

Embodiments of the present application further provide a data processing module. The data processing module is configured to demodulate a modulated signal to obtain N symbols. In a process of demodulating the modulated signal to obtain the N symbols, the data processing module is configured to demodulate the modulated signal to obtain a bit sequence reorder bits in the bit sequence according to a preset rule, and obtain the N symbols according to the reordered bits. The modulated signal is generated after a sending end of the modulated signal processes the N symbols according to the data processing method described above, and the preset rule corresponds to a rule used in a process in which the sending end of the modulated signal maps bits of the N symbols to bit positions of modulation symbols.

That the preset rule corresponds to the rule used in the process in which the sending end of the modulated signal maps the bits of the N symbols to the bit positions of the modulation symbols may be understood as that the preset rule is inverse to the rule used by the sending end in the process of mapping the N symbols. As shown in Table 2A, the data processing module in the receiving end receives a sequence of reordered bits in Table 2A, and the data processing module reorders the sequence of reordered bits according to the preset rule to restore the sequence of reordered bits to a bit sequence before reordering. It is to be noted that the bit sequence before reordering in Table 2A is bits obtained after the data processing module in the receiving end reorders the bit sequence obtained by demodulating the modulated signal. Further, the data processing module in the receiving end recovers the N symbols from the reordered bits according to the number of bits in a single symbol.

The data processing module in this embodiment is disposed in the receiving end and is a function module corresponding to the above-described data processing method performed by the receiving end.

It is to be noted that modules involved in the embodiments of the present application are logic modules, and in practical application, one logic unit may be one physical unit or part of one physical unit, and the logic unit may be implemented by a combination of multiple physical units.

In addition, to highlight the innovative part of the present application, a unit which is not so closely related to the technical problems proposed by the present application is not introduced in this embodiment. However, this does not indicate that no other unit exists in this embodiment.

Another embodiment of the present application relates to an electronic device. As shown in FIG. 15, the electronic device includes at least one processor 601 and a memory 602 communicatively connected to the at least one processor 601. The memory 602 stores an instruction executable by the at least one processor 601, and the instruction, when executed by the at least one processor 601, causes the at least one processor 601 to perform the data processing method in the embodiments described above.

The memory is connected to the processor through a bus. The bus may include any number of buses and any number of bridges, which are interconnected. Various circuits of one or more processors and the memory are connected together through the bus. Various other circuits such as a peripheral device, a voltage regulator, and a power management circuit are also connected together through the bus, which are well-known in the art and thus are not further described herein. A bus interface provides an interface between the bus and a transceiver. The transceiver may be one element or may be multiple elements, such as multiple receivers and senders, and the transceiver provides units configured to communicate with various other apparatuses on a transmission medium. Data processed by the processor is transmitted on a wireless medium by using an antenna. Further, the antenna further receives data and transmits the data to the processor.

The processor is configured to manage the bus and perform common processing and may be further configured to provide various functions including timing, peripheral interfaces, voltage regulation, power management, and other control functions. The memory may be configured to store data used by the processor for performing operations.

Another embodiment of the present application relates to a computer-readable storage medium. The computer-readable storage medium stores a computer program which, when executed by a processor, implements the preceding method embodiments. The computer-readable storage medium may be a non-transient computer-readable storage medium.

It is to be understood by those skilled in the art that all or part of the operations of the method in the preceding embodiments may be implemented by relevant hardware instructed by a program, the program is stored in a storage medium and includes several instructions for enabling a device (which may be a single-chip microcomputer or a chip) or a processor (processor) to perform all or part of the operations in the method in the embodiments of the present application. The foregoing storage medium includes various media that can store program code, such as a USB flash drive, a mobile hard disk, a read-only memory (ROM), a random-access memory (RAM), a magnetic disk, or an optical disk.

## Claims

1. A data processing method, comprising:
mapping all bits of at least one symbol among N symbols to bit positions of a modulation symbol that have a same reliability level, wherein N is an integer, and N>1.

2. The data processing method of claim 1, wherein all the bits of the at least one symbol are mapped to bit positions of a plurality of modulation symbols that have a same reliability level.

3. The data processing method of claim 1, wherein mapping all the bits of the at least one symbol among the N symbols to the bit positions of the modulation symbol that have the same reliability level comprises:
mapping all bits of m1 symbols among the N symbols to bit positions of the modulation symbol that have a lowest reliability level, wherein m1 is an integer, and m1≥1.

4. The data processing method of claim 3, wherein a value of m1 satisfies the following condition: a number of the bit positions of the modulation symbol that have the lowest reliability level is greater than or equal to a number of bits of the m1 symbols and is less than a number of bits of (m1+1) symbols among the N symbols.

5. The data processing method of claim 4, wherein the number of the bit positions of the modulation symbol that have the lowest reliability level is greater than the number of bits of the m1 symbols and is less than the number of bits of the (m1+1) symbols; and
wherein the method further comprises:
mapping all bits of one symbol among the N symbols to L bit positions of the modulation symbol that have the lowest reliability level and to bit positions of the modulation symbol that have a non-lowest reliability level;
wherein L is a difference value between the number of the bit positions that have the lowest reliability level and the number of bits of the m1 symbols.

6. The data processing method of claim 5, wherein the modulation symbol has three or more reliability levels; and
wherein mapping all the bits of the one symbol among the N symbols to the L bit positions of the modulation symbol that have the lowest reliability level and to the bit positions of the modulation symbol that have the non-lowest reliability level comprises:
mapping L bits of the one symbol to the L bit positions of the modulation symbol that have the lowest reliability level, and mapping other bits of the one symbol than the L bits to bit positions of the modulation symbol that have a second lowest reliability level.

7. The data processing method of any one of claims 1 to 6, wherein mapping all the bits of the at least one symbol among the N symbols to the bit positions of the modulation symbol that have the same reliability level comprises:
mapping all the bits of the at least one symbol among the N symbols to bit positions of the modulation symbol that have a same non-lowest reliability level.

8. The data processing method of claim 7, wherein mapping all the bits of the at least one symbol among the N symbols to the bit positions of the modulation symbol that have the same non-lowest reliability level comprises at least one of:
mapping all bits of m2 symbols among the N symbols to bit positions of the modulation symbol that have a second lowest reliability level;
mapping all bits of m3 symbols among the N symbols to bit positions of the modulation symbol that have a third lowest reliability level;
mapping all bits of m4 symbols among the N symbols to bit positions of the modulation symbol that have a fourth lowest reliability level;
mapping all bits of m5 symbols among the N symbols to bit positions of the modulation symbol that have a fifth lowest reliability level;
mapping all bits of m6 symbols among the N symbols to bit positions of the modulation symbol that have a sixth lowest reliability level;
mapping all bits of m7 symbols among the N symbols to bit positions of the modulation symbol that have a seventh lowest reliability level; or
mapping all bits of m8 symbols among the N symbols to bit positions of the modulation symbol that have an eighth lowest reliability level;
whereinm2, m3, m4, m5, m6, m7 and m 8 are each an integer greater than or equal to 1.

9. The data processing method of claim 7, wherein mapping all the bits of the at least one symbol among the N symbols to the bit positions of the modulation symbol that have the same non-lowest reliability level comprises: mapping all bits of m symbols among the N symbols to the bit positions of the modulation symbol that have the same non-lowest reliability level;
wherein a value of m satisfies the following condition: a number of the bit positions of the modulation symbol that have the same non-lowest reliability level is greater than or equal to a number of bits of the m symbols and is less than a number of bits of (m+1) symbols among the N symbols.

10. The data processing method of claim 1, wherein the modulation symbol comprises at least two bit positions that have different reliability levels.

11. The data processing method of claim 1, wherein the modulation symbol is an M-quadrature amplitude modulation, QAM, symbol, M is a W-th power of 2, and W is an integer greater than or equal to 4.

12. The data processing method of claim 11, wherein a number of all the bits of the at least one symbol is T, and T bits are mapped to bit positions of T/2 M-QAM symbols that have a same reliability level.

13. The data processing method of claim 1, wherein a number of bits comprised in each of the N symbols is greater than 2.

14. The data processing method of claim 1, wherein each of the N symbols is a symbol of a Reed-Solomon code or a symbol of a RaptorQ code.

15. A data processing method, comprising:
in response to determining that a modulation symbol has three or more reliability levels, and a number of bits of a single symbol is greater than or equal to a number of bit positions of a single modulation symbol, mapping all bits of at least one symbol among N symbols to bit positions of the modulation symbol that have different non-lowest reliability levels.

16. A data processing method, comprising:
demodulating a modulated signal to obtain a bit sequence and reordering a plurality of bits in the bit sequence according to a preset rule; and
obtaining N symbols according to the recorded plurality of bits;
wherein the modulated signal is generated after a sending end of the modulated signal processes the N symbols according to the data processing method of any one of claims 1 to 14 or the data processing method of claim 15, and the preset rule corresponds to a rule used in a process in which the sending end of the modulated signal maps bits of the N symbols to bit positions of modulation symbols.

17. A data processing module, which is configured to:
map all bits of at least one symbol among N symbols to bit positions of a modulation symbol that have a same reliability level, wherein N is an integer, and N>1; or
in response to determining that a modulation symbol has three or more reliability levels, and a number of bits of a single symbol is greater than or equal to a number of bit positions of a single modulation symbol, map all bits of at least one symbol among N symbols to bit positions of the modulation symbol that have different non-lowest reliability levels.

18. The data processing module of claim 17, wherein all the bits of the at least one symbol are mapped to bit positions of a plurality of modulation symbols that have a same reliability level.

19. The data processing module of claim 17, wherein the modulation symbol comprises at least two bits that have different reliability levels.

20. The data processing module of claim 17, wherein a number of bits comprised in each of the N symbols is greater than 2.

21. The data processing module of claim 17, wherein the modulation symbol is an M-quadrature amplitude modulation (QAM) symbol, M is a W-th power of 2, and W is an integer greater than or equal to 4.

22. The data processing module of claim 21, wherein a number of all the bits of the at least one symbol among the N symbols is T, and T bits are mapped to bit positions of T/2 M-QAM symbols that have a same reliability level.

23. A data processing module, which is configured to:
demodulate a modulated signal to obtain a bit sequence and reorder a plurality of bits in the bit sequence according to a preset rule; and
obtain N symbols according to the reordered plurality of bits;
wherein the modulated signal is generated after a sending end of the modulated signal processes the N symbols according to the data processing method of any one of claims 1 to 14 or the data processing method of claim 15 or the data processing method of claim 16, and the preset rule corresponds to a rule used in a process in which the sending end of the modulated signal maps bits of the N symbols to bit positions of modulation symbols.

24. An electronic device, comprising:
at least one processor; and
a memory communicatively connected to the at least one processor;
wherein the memory stores an instruction executable by the at least one processor, and the instruction, when executed by the at least one processor, causes the at least one processor to perform the data processing method of any one of claims 1 to 14, the data processing method of claim 15, or the data processing method of claim 16.

25. A computer-readable storage medium storing a computer program, wherein the computer program, when executed by a processor, causes the processor to perform the data processing method of any one of claims 1 to 14, the data processing method of claim 15, or the data processing method of claim 16.
